# FASCICULE DE BREVET EUROPEEN

(11) **EP 1 392 591 B1**
(45) Date de publication et mention de la délivrance du brevet: **17.08.2005**
(21) Numéro de dépôt: 02747513.6
(22) Date de dépôt: 06.06.2002
(51) Int. Cl.: B65H 54/28, H02K 41/03

(54) **DISPOSITIF DE VA ET VIENT POUR LE RENVIDAGE D'UN FIL SOUS LA FORME D'UNE BOBINE**
FADENVERLEGUNG FÜR EINE VORRICHTUNG ZUM AUFWICKELN EINES FADENS AUF EINE SPULE
RECIPROCATING DEVICE FOR WINDING A YARN IN THE FORM OF A REEL

(30) Priorité: 07.06.2001 FR 0107428; 19.07.2001 FR 0109664
(43) Date de publication de la demande: 03.03.2004
(73) Titulaire: Rieter Textile Machinery France, 26014 Valence Cedex (FR)
(72) Inventeur: FLECHON, Philippe, F-69300 CALUIRE (FR)
(74) Mandataire: Thivillier, Patrick
(86) Numéro de dépôt international: PCT/FR2002/001942
(87) Numéro de publication internationale: WO 2002/098777

(56) Documents cités:
- EP-A- 0 905 869
- EP-A- 0 924 843
- EP-A- 0 967 316
- DE-A- 4 428 321
- DE-A- 19 623 771
- US-A- 2 964 260
- US-A- 4 868 431
- US-A- 4 945 268
- PATENT ABSTRACTS OF JAPAN vol. 006, no. 123 (E-117), 8 juillet 1982 (1982-07-08) -& JP 57 052365 A (TAKAHASHI YOSHITERU), 27 mars 1982 (1982-03-27)
- PATENT ABSTRACTS OF JAPAN vol. 007, no. 115 (E-176), 19 mai 1983 (1983-05-19) -& JP 58 033964 A (YOSHITERU TAKAHASHI), 28 février 1983 (1983-02-28)

## Description

### Domaine technique

La présente invention concerne le domaine du renvidage d'un fil textile sur un support afin de former une bobine lors des différentes étapes qu'implique sa production (filature, étirage, texturation ou toute autre opération), qui implique d'enrouler le fil sur un support (tube carton, métallique...), ledit support étant entraîné soit par son axe soit par pression sur un organe pilote.

Pour réaliser une telle opération, le fil est distribué selon une génératrice le long de la bobine soit sous la forme de spires rectilignes parallèles, soit sous forme de spires ondulées, parallèles dans la même couche, mais décalées et croisées d'une couche par rapport à l'autre.

En général, la vitesse de déplacement le long de la bobine est constante, l'inversion du mouvement aux extrémités des bobines étant, par contre, effectuée le plus rapidement possible afin que les bords de la bobine ne soient pas plus épais que le centre du corps de bobinage par suite d'un dépôt accru de fil.

Cette inversion rapide de la direction du déplacement produit donc sur un guide-fil déplacé en va et vient des accélérations et des décélérations très élevées au point d'inversion.

### Techniques antérieures

De très nombreuses propositions ont été faites pour réaliser des systèmes de va-et-vient permettant de distribuer le fil à la surface du support à la plus grande vitesse possible, pouvant atteindre 1000 à 2000 m/min ou plus, tout en obtenant des enroulements présentant une densité parfaite sur toute leur épaisseur et pouvant être soit à flancs droits, soit présenter des flancs latéraux inclinés (bobines biconiques).

Pour assurer la commande des déplacements du guide-fil, il a été proposé d'utiliser des systèmes à came, à tambour rainuré, de monter le guide-fil sur un système de va et vient à courroie entraîné par un moteur pas à pas commandé par un microprocesseur (EP 302461).

Dans toutes les solutions antérieures dans lesquelles le guide-fil est monté sur un élément de transmission (courroie, support pivotant...) entraîné par un moteur, l'un des principaux problèmes qui se posent est celui des pics instantanés de puissance très élevés, de l'ordre de plusieurs centaines de watts, qu'il convient de fournir au niveau de la zone de renversement du sens de déplacement du guide en raison des masses en mouvement.

Il aurait pu être envisagé d'assurer les déplacements du guide par utilisation directe d'un moteur linéaire entraînant donc le dispositif de va et vient pour la dépose du fil sur la bobine, par exemple des moteurs du type de ceux utilisés en robotique, dans le secteur de l'imprimerie, de la métrologie pour tables de mesure.

D'une manière générale, ces moteurs conventionnels peuvent être classés en deux grandes familles.

La première de ces familles est constituée par les moteurs du type linéaire à chariot ou curseur, c'est-à-dire un moteur qui fonctionne d'une manière similaire à un moteur pas à pas déroulé à plat.

Il aurait donc pu être envisagé de monter l'ensemble de distribution du fil directement sur ce chariot ou curseur.

Cependant, dans un tel cas, le moteur doit être conçu pour permettre une course totale au moins égale à la course utile de l'élément mobile qui est donc constituée par des bobines, alors que le stator est constitué par un aimant permanent.

De plus, l'attraction entre le stator (aimant) et le circuit embarqué, est extrêmement forte, ce qui imposerait donc un système de guidage en translation capable de résister à cette attraction tout en conservant un entrefer constant.

Par suite, le curseur portant l'élément de distribution du fil devrait donc être monté sur un chariot associé aux bobines mobiles, ce qui impliquerait des moyens de guidage tels que billes de roulements ou galets, créant donc une masse en mouvement importante, limitant les performances en accélération du système.

Enfin, si une telle solution était adoptée, se poserait le problème d'amener l'électricité aux bobines mobiles par des fils électriques, ce qui impose l'utilisation de câbles souples ou de chaînes porte-câbles qui augmentent encore la masse en mouvement et limite les accélérations.

La deuxième famille de moteurs linéaires conventionnels est celle des moteurs dits "tubulaires".

Un tel type de moteur tubulaire est réalisé de telle sorte que les bobines et les systèmes magnétiques soient fixes, l'aimant permanent étant quant à lui déplaçable.

Cet aimant permanent est cylindrique et est assimilable au piston ou à la tige d'un vérin.

Dans un tel cas, on aurait donc pu envisager de disposer le guide-fil en bout du vérin.

Dans sa conception, un tel moteur linéaire à aimant permanent mobile est donc constitué d'un tube de matériau magnétisé en une succession de pôles nord-sud alternés. Les bobines et les forces magnétiques associés sont disposés comme un empilement d'anneaux autour de ce tube dans le corps du moteur.

Compte tenu du fait que dans un tel type de moteur, seul l'aimant est mobile, on réduit donc les masses en mouvement et on augmente les performances en accélération. Il est par ailleurs très facilement intégrable dans les montages mécaniques au lieu et place de vérins.

Cependant, l'application de tels moteurs au bobinage de fils textiles, et qui assurerait donc le déplacement alternatif du guide de va et vient, présenterait un inconvénient majeur qui est que la présence du vérin et son encombrement latéral empêcherait de disposer les têtes de bobinage côte à côte comme cela est souvent le cas sur les machines textiles.

De plus, même si les masses en mouvement sont réduites, elles restent encore élevées puisque l'aimant tubulaire doit avoir au moins la longueur de la course de bobinage plus une longueur suffisante qui reste dans le corps du vérin pour recevoir les forces magnétiques.
En effet, en bout de course, si l'aimant sort du champ magnétique, le moteur a moins de force au moment où, dans le cas du bobinage d'un fil, on a besoin de la force maximale pour une inversion rapide du mouvement.
En d'autres termes, pour avoir une force constante sur toute sa course, ce type de vérin doit avoir un aimant permanent dont la longueur est au moins égale à deux fois la course.

L'état de la technique peut être illustré par l'enseignement du document DE-A-19623771 concemant un dispositif permettant le renvidage à grande vitesse d'un fil sur un support entraîné en rotation et comportant un système de distribution déplacé selon un mouvement de va et vient parallèle à la surface du dudit support avec déccélération et accélération rapides au point d'inversion du mouvement de va et vient. Le déplacement du guide fil de dépose est réalisé par l'intermédiaire d'un curseur associé à une plaque aimantée et d'un moteur linéaire.

On peut citer également l'enseignement du document US-A-4945268 qui décrit un moteur linéaire dans lequel le stator est constitué par un ensemble de modules élémentaires disposés l'un à côté de l'autre. Une plaque aimanté est enfermée et les plots sont associés à une seule bobine pour constituer un champ magnétique.

Dans le document EP-A 0905869, les circuits magnétiques ne comportent pas de bobines

### Exposé de l'invention

Or on a trouvé, et c'est ce qui fait l'objet de la présente invention, un dispositif perfectionné permettant d'assurer le renvidage, à grande vitesse, d'un fil sur un support entraîné en rotation et comportant un système de distribution du fil composé d'un guide-fil de dépose et d'un élément mobile ou curseur déplacé selon un mouvement de va et vient parallèlement à la surface dudit support, avec décélération et accélération rapides au point d'inversion du mouvement de va et vient.
Le e-déplacement du guide-fil de dépose est réalisé par l'intermédiaire de l'élément mobile ou curseur associé à une plaque aimantée d'un moteur linéaire, alimenté en courant biphasé ou triphasé.

Selon l'invention, le stator du moteur linéaire est constitué par au moins un ensemble de modules élémentaires disposés soit face à face soit dans le prolongement les uns des autres, comportant chacun une pluralité de circuits magnétiques en forme de C qui définissent entre les extrémités de leurs branches espacées un entrefer à l'intérieur duquel est positionnée la plaque aimantée, comportant une alternance de pôles Nord et Sud, qui constitue l'élément mobile déplaçant le curseur portant le guide-fil et dans lequel :
- les circuits magnétiques de chaque module élémentaire sont constitués par une pluralité de paires de plots disposés en regard l'un de l'autre dans chaque paire, chaque série de plots étant associés à une bobine pour constituer un champ magnétique dans l'entrefer qu'ils définissent, le pas entre deux plots consécutifs correspondant à deux fois la distance entre deux pôles Nord/Sud successifs prévus sur l'aimant plat,
- les plots d'un module connecté à une même phase de l'alimentation électrique sont décalés par rapport aux plots connectés à l'autre ou aux autres phases d'une valeur correspondant au pas magnétique divisé par le nombre de phases ;
- la plaque aimantée est dimensionnée pour pouvoir être insérée dans l'entrefer d'au moins un module élémentaire de chacune des phases d'alimentation, notamment en longueur pour couvrir deux modules (en biphasée) ou trois modules (en triphasé) alignés, ou notamment en largeur pour couvrir deux modules (en biphasé) placés en vis à vis, ladite plaque comportant sur ses deux faces, une alternance de pôles Nord/Sud espacés d'une distance correspondant à au moins la demi-distance comprise entre deux plots consécutifs ;
- des moyens sont prévus pour assurer le maintien de la plaque aimantée strictement dans le plan médian de l'entrefer du circuit magnétique.

Conformément à l'invention, l'alimentation électrique peut être réalisée soit en courant biphasé, soit en courant triphasé.

Lorsque l'alimentation est réalisée en courant biphasé, le dispositif comporte au moins trois modules élémentaires alignés, les plots du module central étant décalés d'un demi-pas magnétique, du même côté, par rapport aux plots du module qu'il précède et du module suivant qui lui est associé.
Ou bien le dispositif comporte au moins un couple de deux modules situés en vis-à-vis, respectivement connectés à chacune des deux phases, les plots de l'un des modules étant décalés d'un demi-pas magnétique par rapport aux plots du module qui lui fait face.

Conformément à l'invention, il est possible de réaliser un moteur linéaire de longueur de course quelconque en utilisant plusieurs modules alignés ou en vis à vis. Dans ce cas, tous les modules connectés à une même phase sont disposés de sorte que leurs plots soient espacés d'un nombre entier de paires de pas magnétiques et donc de sorte que quelle que soit la position de l'aimant, leurs plots soient en vis-à-vis d'un pôle de même signe. De même, tous les modules connectés à l'autre phase sont disposés de sorte que leurs plots soient espacés d'un nombre entier de paires de pas magnétiques, et donc de sorte que quelle que soit la position de l'aimant, leurs plots soient en vis-à-vis d'un pôle de même signe, et qu'ils soient tous décalés d'un demi-pas magnétique et dans le même sens par rapport aux plots des modules connectés à la première phase.

Selon l'invention, tous les modules raccordés à une même phase peuvent être alignés d'un même côté de l'aimant, ou de part et d'autre de ce dernier.

Lorsque l'alimentation électrique est réalisée en courant triphasé, le dispositif comporte au moins quatre modules élémentaires alignés, les plots du second module étant décalés d'un tiers de pas magnétique et du même côté par rapport aux plots du module précédent, les plots du troisième module étant décalés de un tiers de pas magnétique par rapport aux plots du second module.

Selon l'invention, les circuits magnétiques en C de chaque module élémentaire peuvent être réalisés soit dans un ensemble monobloc par usinage ou moulage d'encoches en creux pour définir des plots consécutifs disposés par paires en regard l'un de l'autre et définissant entre eux un entrefer, soit par une succession de plaques en forme de C, séparées les unes des autres.

Avantageusement, les modules élémentaires constituant le dispositif conforme à l'invention sont identiques, le décalage d'un demi-pas magnétique ou d'un tiers de pas magnétique des plots d'un module par rapport aux plots du module précédent en vis à vis étant obtenu par l'écartement des modules élémentaires entre eux.

Le maintien de la plaque monté strictement dans le plan médian de l'entrefer du circuit magnétique est obtenu par l'intermédiaire de moyens de guidage du curseur portant le guide-fil, moyens qui maintiennent la position de la plaque aimantée dans l'entrefer des stators et s'opposent aux efforts d'attraction entre les aimants et les pôles du circuit magnétique.

Ces moyens de guidage peuvent être constitués par des jeux de galets placés sur le curseur et qui circulent sur des guides s'étendant sur toute la longueur du système de distribution.

Si le dispositif conforme à l'invention peut éventuellement être construit pour ne comporter qu'une série de modules élémentaires alignés, selon une première forme de réalisation préférentielle, un second jeu de stators est disposé symétriquement par rapport à un plan central de symétrie, ce qui permet d'obtenir une force plus importante et parfaitement équilibrée par rapport à l'axe central de la plaque aimantée déplaçable dans l'entrefer des circuits magnétiques.

Dans cette forme de réalisation préférentielle, le dispositif comporte donc deux stators constitués de modules élémentaires alignés, lesdits stators étant montés symétriquement de part et d'autre d'un plan central de symétrie, la plaque aimantée qui constitue l'élément mobile déplaçant le curseur supportant le guide-fil comportant, disposé symétriquement par rapport à son axe longitudinal, sur ses deux faces et dans la zone située dans l'entrefer des plots, une alternance de pôles Nord et Sud disposés en correspondance, le guide-fil étant monté sur le curseur lui-même solidarisé d'un renfort central disposé dans le plan médian de la plaque aimantée entre les deux séries de pôles magnétiques.

Dans ce cas, les modules élémentaires sont également identiques et le décalage d'un demi-pas magnétique ou d'un tiers de pas magnétique des plots d'un module par rapport aux plots du module précédent et des modules suivants qui lui sont associés, sont également obtenus par espacement entre deux modules consécutifs.

Le nombre d'éléments modulaires permettant l'entraînement du guide-fil sera fonction de la longueur de l'enroulement à réaliser.

Si le dispositif est constitué d'une série de modules alignés, alors le nombre minimum de modules est de trois lorsque l'alimentation est réalisée en biphasé, et de quatre lorsque l'alimentation est réalisée en triphasé. L'amplitude du déplacement, donc la largeur de l'enroulement est donc égale au minimum à la largeur de l'un des modules.
En d'autres termes, avec une succession de "n" modules consécutifs, on obtiendra, grâce au dispositif conforme à l'invention, une amplitude de dépose égale à (n-2) en biphasé ou à (n-3) en triphasé, multipliée par la largeur de chaque module constituant le stator.

Si le dispositif est constitué d'une série de couples de modules en vis à vis, le nombre minimum de couples décalés est de deux et l'amplitude de déplacement est égale au minimum à la largeur de l'un des modules.

En d'autres termes, avec une succession de « **n** » couples de modules, on obtient une amplitude de dépose de « **n-1** » multipliée par la largeur de chaque module.

Selon une autre forme de réalisation conforme à l'invention, tous les modules peuvent être placés en vis-à-vis et alignés sans aucun décalage, la plaque aimantée présentant alors de part et d'autre de son axe de symétrie une alternance de pôles Nord/Sud décalés d'un demi-pas magnétique, et dans ce cas, tous les modules situés d'un même côté de l'aimant sont connectés à la même phase.

Dans cette forme de réalisation préférentielle, le dispositif comporte donc deux stators constitués de modules élémentaires alignés, lesdits stators étant montés de part et d'autre d'un plan central de symétrie, le nombre d'éléments modulaires permettant l'entraînement du guide-fil sera fonction de la longueur de l'enroulement à réaliser.

Pour obtenir le couple maximum, la totalité de la plaque aimantée doit être immergée dans les champs magnétiques créés dans l'entrefer des modules. En conséquence, pour un alignement de n paires de modules placés en vis-à-vis, l'amplitude du déplacement et donc la largeur de l'enroulement est donc égale à n fois la largeur d'un module moins la longueur de la plaque aimantée.

Par ailleurs, pour assurer le contrôle et la commande de l'inversement du sens de va-et-vient, des moyens de détection de la position du curseur supportant le guide-fil sont associés à l'ensemble conforme à l'invention, de tels moyens de détection pouvant être constitués par une cellule électrique, un miroir associé à un capteur laser. De préférence, de tels moyens sont constitués par un ou plusieurs capteurs par sonde à effet Hall.

### Description sommaire des dessins

L'invention et les avantages qu'elle apporte sera cependant mieux comprise grâce à la description qui suit et qui est illustrée par les schémas annexés, dans lesquels :
La figure 1a est une vue en perspective illustrant le principe de la structure de base d'un moteur linéaire pas à pas utilisé pour la réalisation d'un dispositif conforme à l'invention, selon une forme de réalisation ;
La figure 1b illustre une variante d'une telle structure de base ;
La figure 1c montre, vu en bout, le circuit magnétique élémentaire dans un tel moteur ;
La figure 2 est une vue schématique montrant le positionnement des plots des circuits magnétiques et l'espacement qu'ils ont entre eux par rapport aux pôles Nord et Sud de l'aimant mobile déplaçable dans l'entrefer du stator réalisé conformément à l'invention.
La figure 3 illustre une vue générale d'un système de renvidage de fil équipé d'un système de va et vient commandé par un moteur linéaire pas à pas pour permettre le déplacement du guide-fil de dépose ;
Les figures 4a et 4b montrent en détail le concept général d'un mécanisme de va et vient permettant la dépose du fil réalisé conformément à l'invention ;
Les figures 5a et 5b sont des vues de détail d'une forme de réalisation de moyens de guidage pour le guide-fil de dépose entraîné par un moteur pas à pas conformément à l'invention ;
La figure 6 est la représentation schématique des stators et de l'élément mobile d'un ensemble de commande du guide-fil réalisé conformément à la figure 1 et comportant quatre modules élémentaires alignés, et la manière dont est assurée leur commande ;
Les figures 7a et 7b illustrent le cycle de fonctionnement d'un ensemble réalisé selon une forme de l'invention, et comportant donc une succession de quatre modules élémentaires alignés constituant le moteur pas à pas assurant le déplacement du guide-fil ;
La figure 8 est une vue schématique de dessus d'un moteur pas à pas réalisé conformément à l'invention, comportant six modules élémentaires assurant le déplacement d'une plaque aimantée dont la longueur correspond à deux modules sur un déplacement équivalent à la somme des longueurs de quatre modules ;

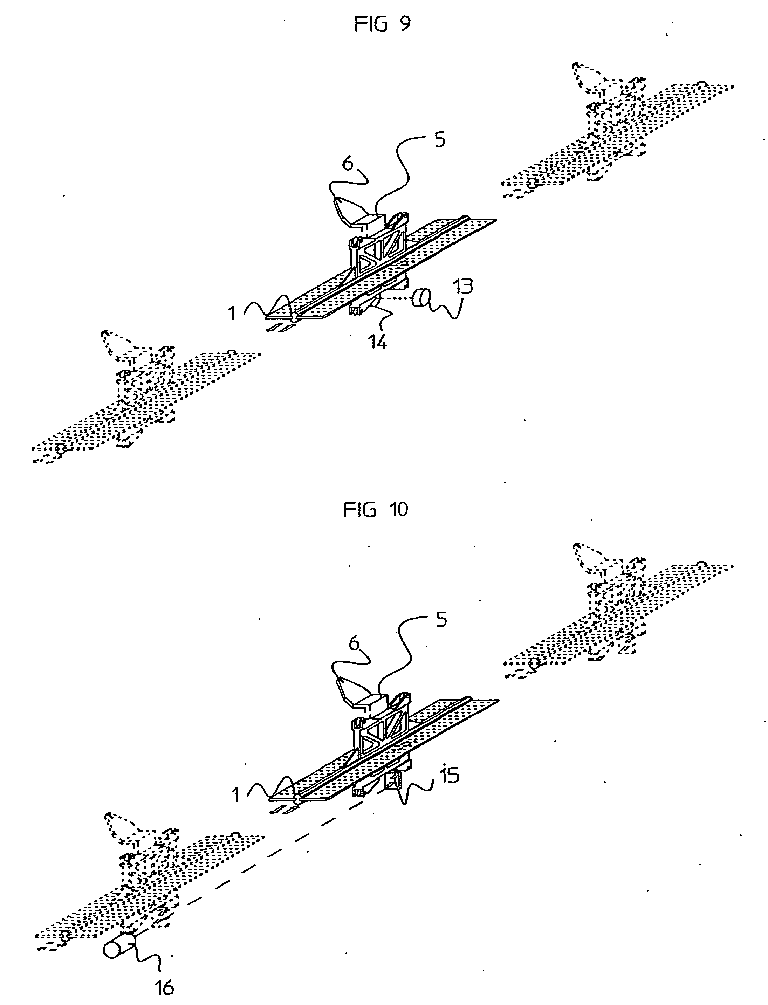

Les figures 9, 10 et 11 illustrent quant à elles, vus en perspective, trois modes de réalisation permettant de détecter précisément le positionnement du curseur distributeur de fil pendant le cycle de bobinage afin de piloter les séquences de distribution, et notamment d'inversion du sens de déplacement du guide distributeur de fil en fin de course ;
Les figures 11a et 11b illustrent la manière dont fonctionne un détecteur de position par sonde à effets Hall tel qu'illustré à la figure 11 ;
Les figures 12a et 12b illustrent une variante de détection par plusieurs détecteurs décalés et ;
La figure 13 illustre une variante d'un moteur pas à pas conforme à l'invention, dont la commande est réalisée en triphasé ;
Les figures 14a et 14b illustrent respectivement le système de commande et le fonctionnement d'un ensemble réalisé conformément à l'invention, dont l'alimentation est réalisée en triphasé.
Les figures 15a, 15b, 15c et 16 illustrent, en perspective (figures 15a et 15b), vue en bout (figure 15c) et vue de dessus (figure 16), la conception générale d'un couple de modules placés en regard l'un de l'autre, constituant l'élément de base d'un moteur linéaire pas à pas apte à être mis en oeuvre pour assurer le déplacement de va et vient d'un guide nécessaire à la dépose d'un fil sur un support (bobine).
La figure 17 est une vue de dessus illustrant un dispositif conforme aux figures 15a, 15b, 15c et 16, comportant six couples de modules en vis à vis.
La figure 18 illustre une variante de la figure 17 comportant également six couples de module.

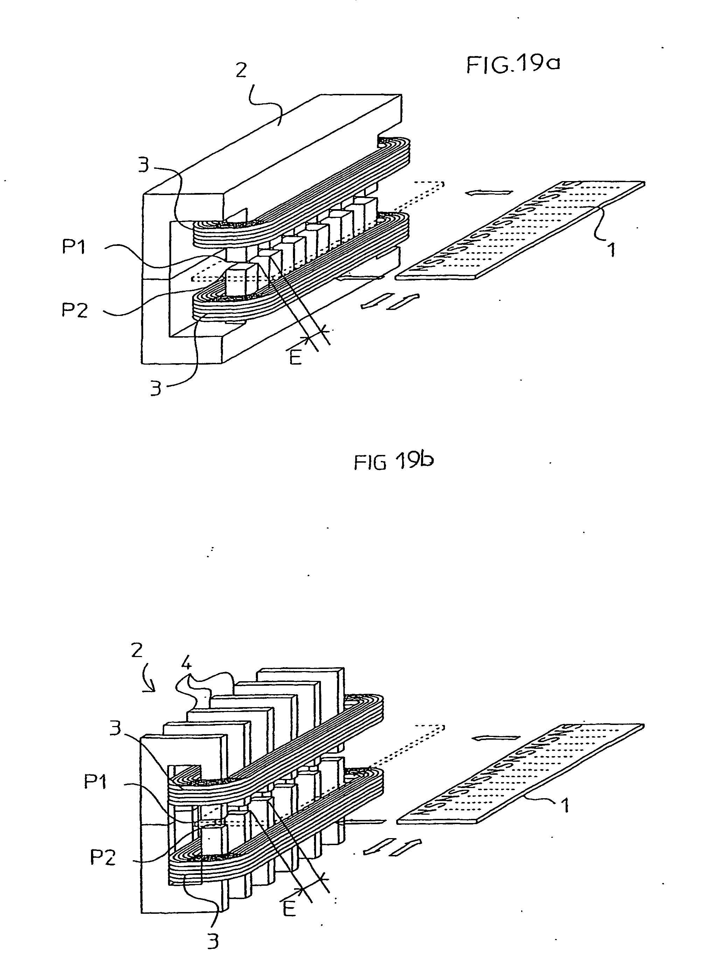

Les figures 19a et 19b sont des vues en perspective montrant deux modes de réalisation des circuits en C que comporte chaque module élémentaire.
La figure 20 illustre la manière dont est assurée l'alimentation en courant biphasé des modules, la figure 21a étant un diagramme représentant les courants d'alimentation des bobines et la figure 21b le cycle de fonctionnement d'un tel ensemble.

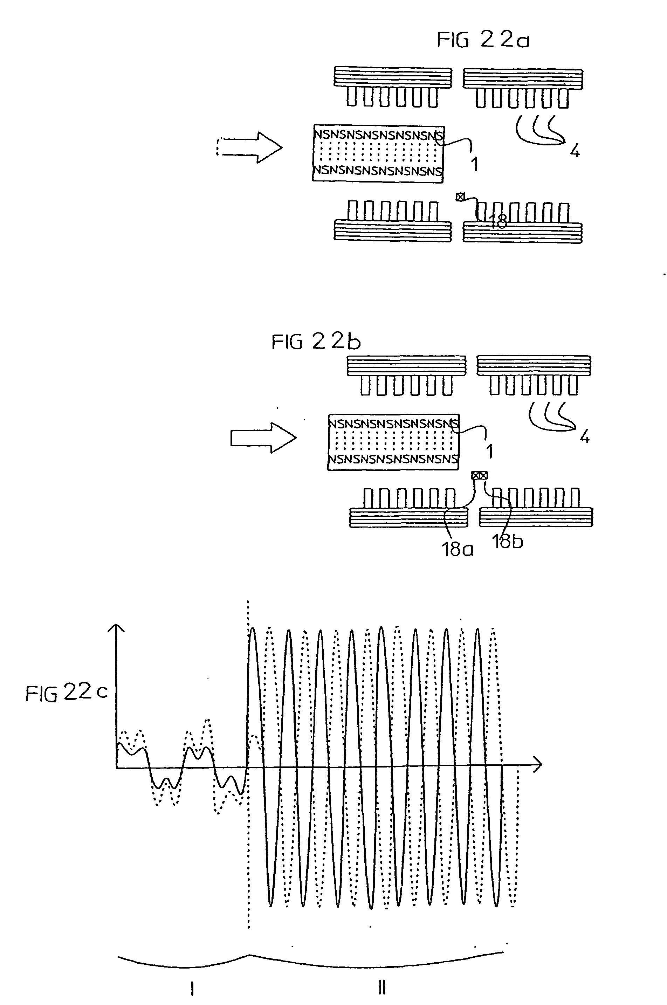

Les figures 22a, 22b, 22c illustrent différents types de moyens de détection permettant d'assurer le contrôle et la commande de l'inversion du sens de va et vient.

### Manière de réaliser l'invention

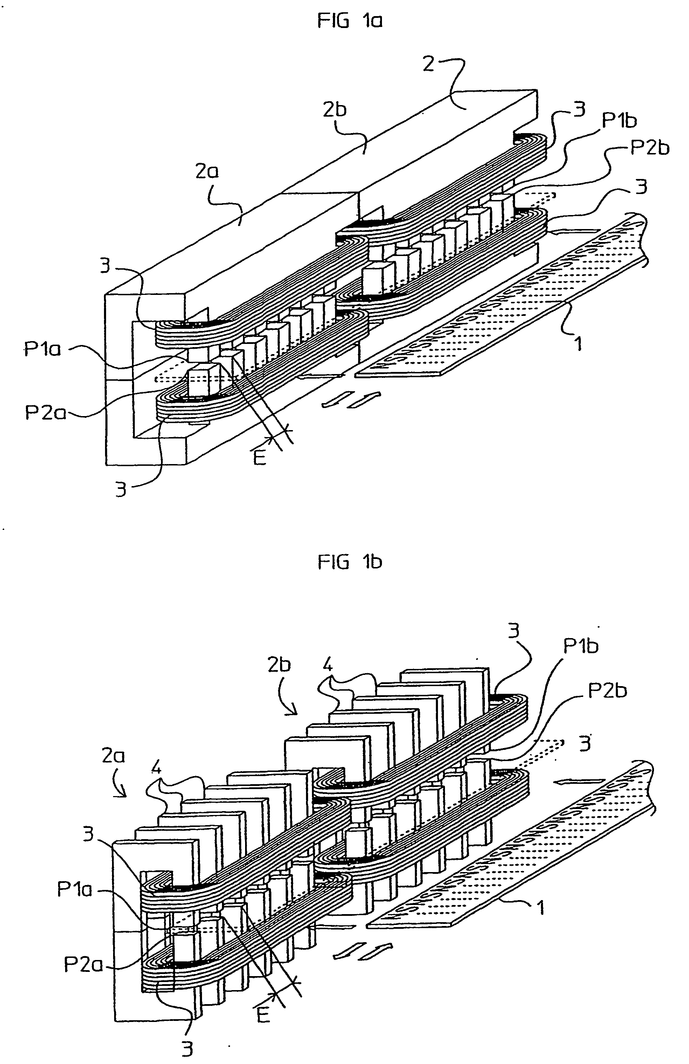

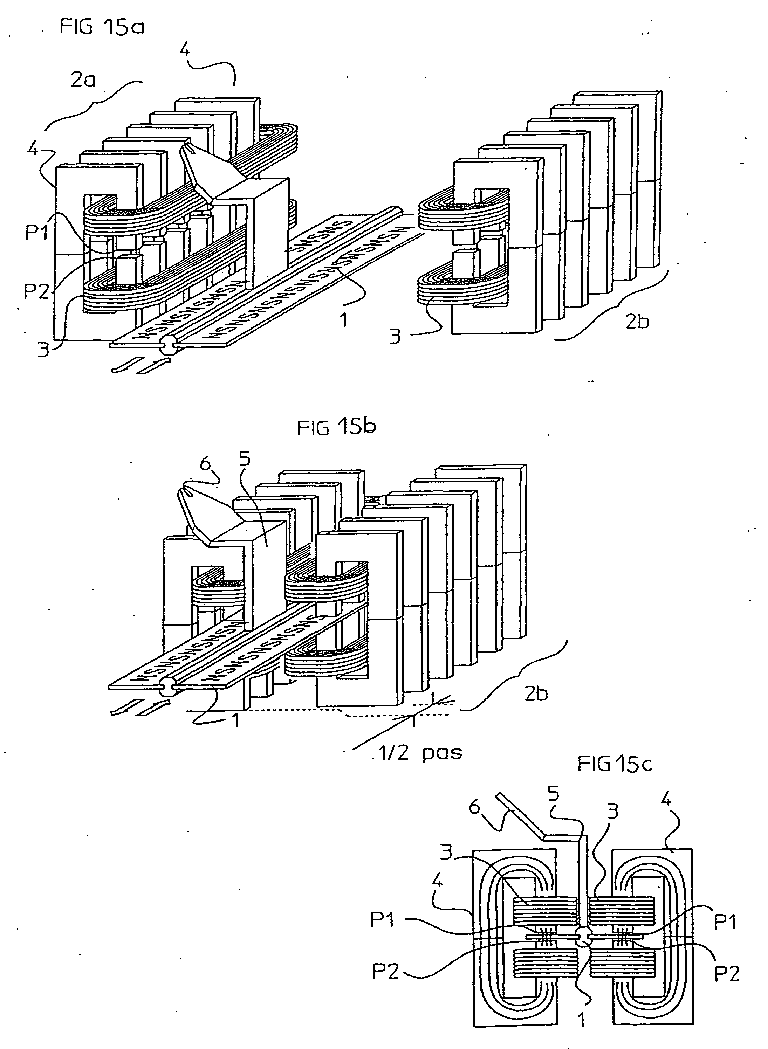

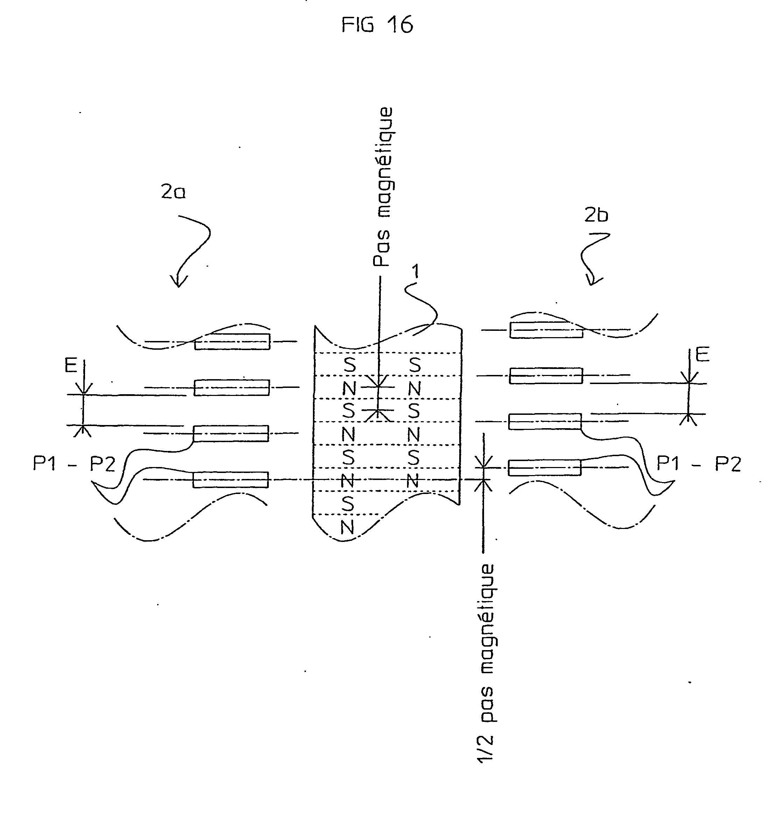

Les figures 1a, 1b,1c et 2, et 15a, 15b, 15c et 16 illustrent d'une manière générale, la conception d'un moteur linéaire pas à pas apte à être mis en oeuvre pour assurer le déplacement de va et vient d'un guide nécessaire à la dépose d'un fil sur un support (bobine).

Le principe du moteur linéaire utilisé pour la réalisation d'un dispositif conforme à l'invention est similaire au fonctionnement des moteurs dits "pas à pas", et dont le rotor à aimant permanent est en forme de disque.

Un tel type de moteur rotatif pas à pas ressort notamment des enseignements du brevet US 4,330,727.

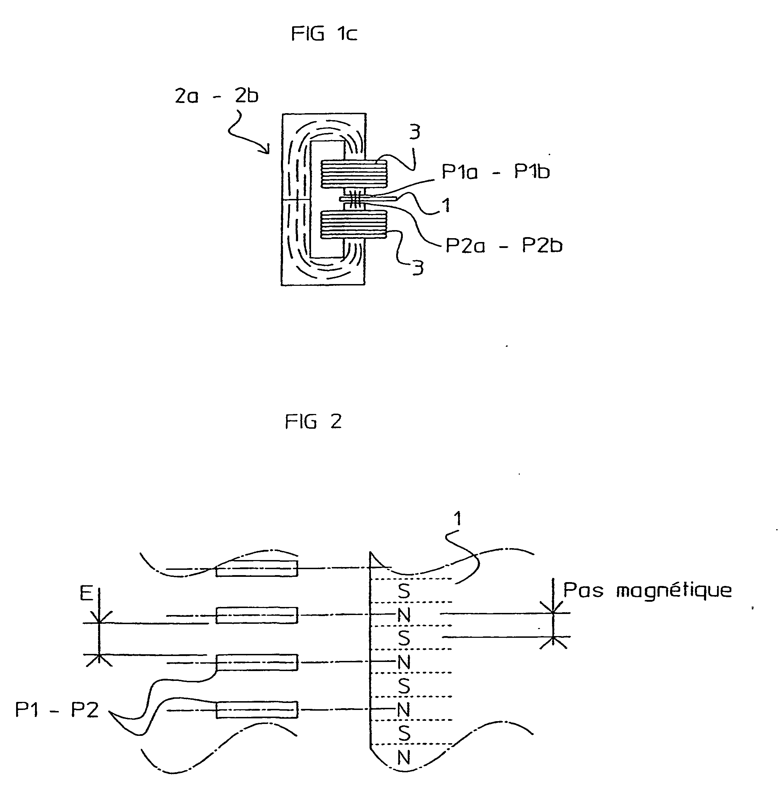

Pour la réalisation d'un dispositif conforme à l'invention, un tel moteur rotatif est transformé, ainsi que cela ressort des figures 1a, 1b, 1c et 2 en un moteur linéaire, dans lequel le disque rotatif est donc remplacé par une plaque rectiligne (1) présentant sur chacune de ses faces deux séries de pôles magnétiques de polarité alternante nord/sud (N-S). Le stator du moteur rotatif est donc déroulé et comporte donc deux éléments de stator (2a,2b) comportant chacun plusieurs circuits magnétiques élémentaires (4) obtenus par l'intermédiaire de bobines (3) associées à chaque série de plots (P1,P2).

Dans la suite de la description, ces plots (P1,P2) seront affectés d'un indice a,b afin de différencier les deux modules élémentaires, dont les plots sont donc décalés par rapport aux pôles Nord et Sud et qui sont nécessaires pour réaliser un ensemble conforme à l'invention.

Dans la forme de réalisation illustrée, chacun des circuits magnétiques élémentaires (4) comporte un entrefer et tous les entrefers sont formés à la même distance par rapport au plan médian à l'intérieur duquel est disposée la plaque mobile (1) qui comporte donc sur sa surface une alternance de pôles Nord /Sud (N/S).

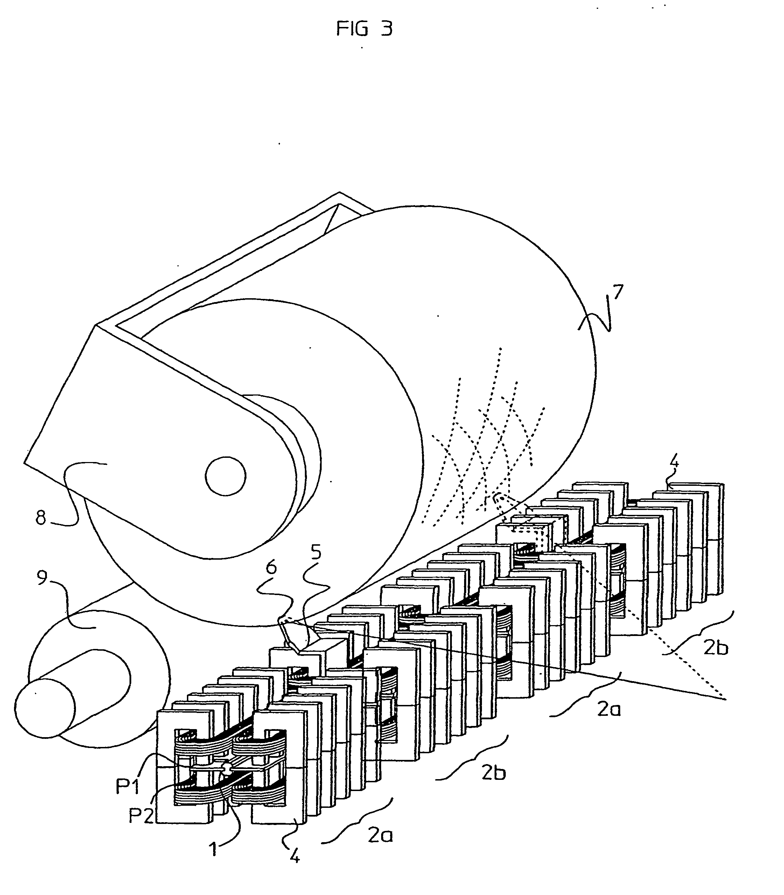

Pour réaliser un moteur linéaire, dont le fonctionnement est donc similaire à un moteur pas à pas dont le rotor à aimant permanent est en forme de disque, et assurer le déplacement d'un guide-fil animé d'un mouvement de va-et-vient, un tel moteur doit être constitué, dans une première forme de réalisation, d'au moins trois modules élémentaires (2a, 2b,2a) alignés côte à côte, la figure 3 représentant un exemple avec quatre modules (2a,2b,2a,2b).

Cette figure 3 est une vue générale de la mise en oeuvre d'un tel moteur linéaire dans son mode de réalisation préférentiel, et qui permet donc d'assurer le déplacement d'un curseur (5) comportant un guide (6) de dépose d'un fil de manière à former une bobine (7) montée sur un support porté par un système de renvidage (8) d'une machine textile, cette bobine (7) étant en appui contre un cylindre entraîneur (9).

Pour en assurer le déplacement, un tel moteur linéaire est donc conçu de telle sorte qu'il comporte au moins trois modules élémentaires (2a,2b,2a), les plots (P1a, P2a) des modules (2a) étant décalés d'un demi-pas magnétique par rapport aux plots (P1b,P2b) des modules (2b).

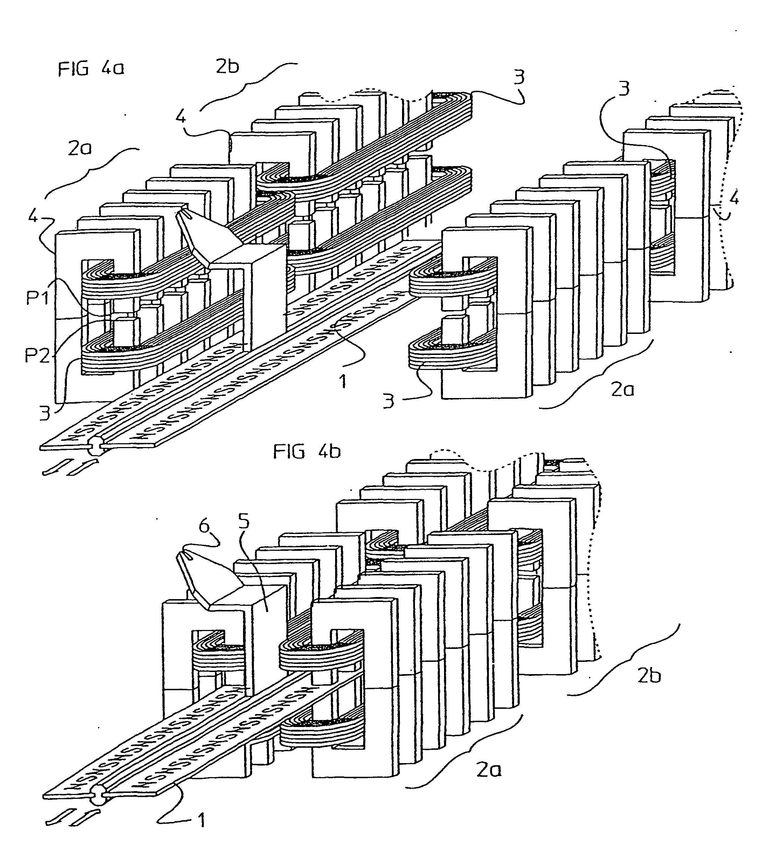

Comme cela ressort de cette figure 3, et également des figures 4a,4b,4c, le moteur linéaire conforme à l'invention comporte deux circuits identiques montés face à face, la plaque (1) supportant l'élément guide-fil (5,6) étant donc déplacé dans l'entrefer de ces deux circuits magnétiques.

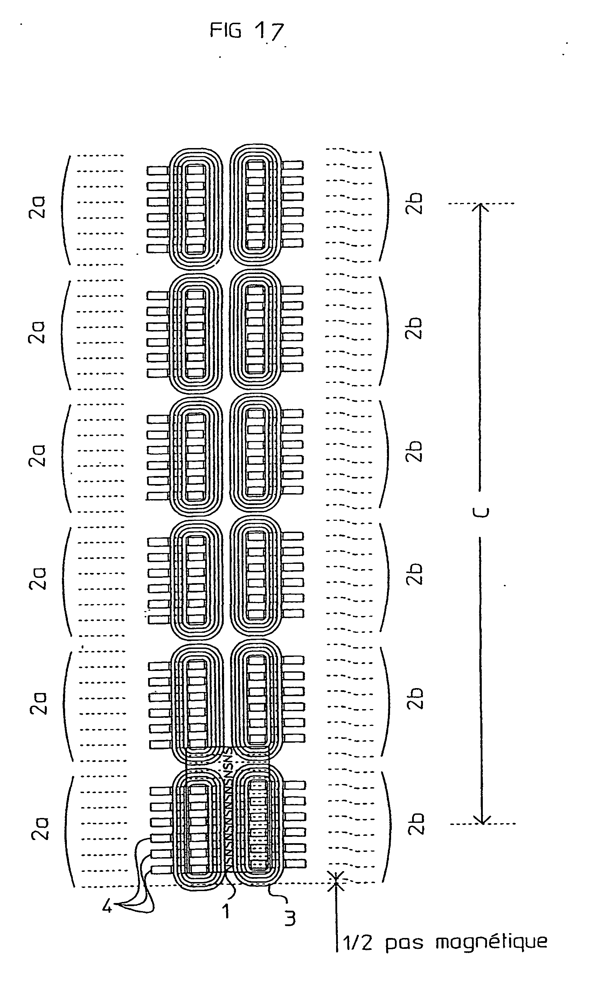

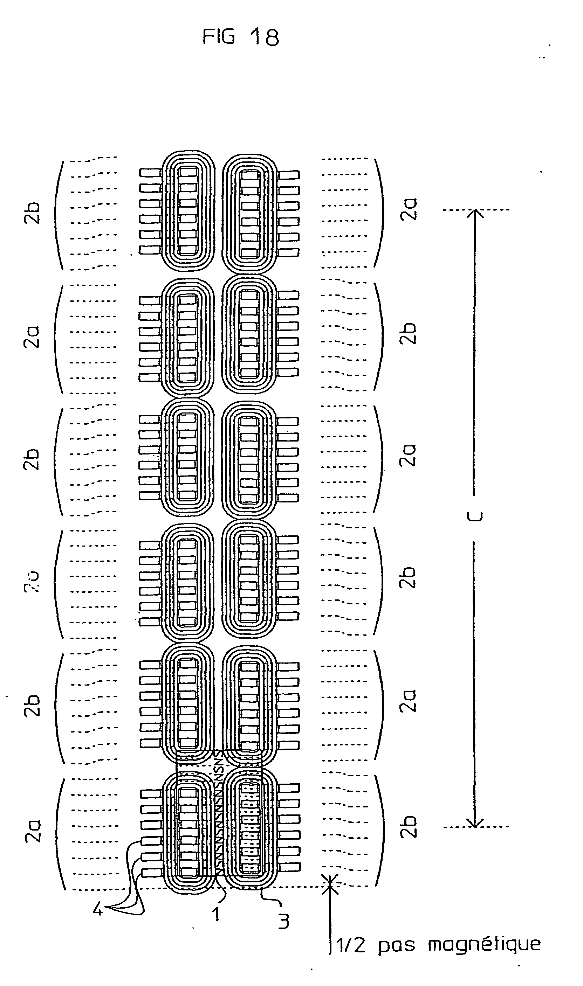

Dans une autre forme de réalisation, pour réaliser un moteur linéaire dont le fonctionnement est donc similaire à un moteur pas à pas dont le rotor à aimant permanent est en forme de disque, et assurer le déplacement d'un guide-fil animé d'un mouvement de va-et-vient, un tel moteur doit être constitué d'au moins deux modules élémentaires (2a,2b) placés en vis-à-vis. Pour obtenir la course totale souhaitée, on aligne plusieurs couples de modules selon l'un des arrangements (figure 17 ou 18).

La figure 17 représente un exemple avec six couples de modules (2a, 2b) dans lequel tous les modules (2a) sont placés du même côté de l'aimant et tous les modules (2b) sont placés de l'autre côté de l'aimant et décalés dans le même sens (ici vers le haut) d'un demi-pas magnétique.

La figure 18 représente un exemple avec six couples de modules (2a, 2b) dans lesquels les modules (2a) et (2b) sont alternés dans chacun des deux alignements de part et d'autre de l'aimant. Tous les modules (2b) sont décalés dans le même sens (ici vers le haut) d'un demi-pas magnétique.

Par ailleurs, le guidage de la plaque aimantée qui assure le déplacement du curseur (5) supportant le guide-fil (6) qui lui est associé est assuré par des moyens additionnels tels que des galets (10) placés sur le curseur (5) qui lui-même est monté sur un renfort central (12) disposé dans le plan médian de ladite plaque aimantée (1) entre deux séries de pôles magnétiques. Ces galets sont en appui sur des guides fixes (11) s'étendant sur toute la largeur de la position de la machine textile sur laquelle le fil doit être distribué.

Dans cette forme de réalisation, comme indiqué précédemment, la plaque aimantée (1) comporte donc, disposées de manière symétrique par rapport à sa partie centrale (12), deux séries d'une alternance de pôles Nord et Sud.

Dans cette forme de réalisation, les circuits magnétiques (2a,2b) ont donc une forme générale dite en C.

Ces circuits pourraient être réalisés soit d'une manière monobloc, mais seront de préférence réalisés en deux parties élémentaires comme illustré aux figures 1a,1b,1c et 3, de manière à pouvoir faciliter la pose des bobines (3).

Chaque circuit doit donc présenter des encoches E profondes pour que le flux magnétique se concentre au droit des plots (P1, P2) ainsi formés.

Deux possibilités peuvent être envisagées pour réaliser de telles encoches (E).

Dans la forme de réalisation illustrée par la figure 1a, les encoches E définissant les plots (P1) ou (P2) sont réalisées par usinage ou moulage.

Dans la variante illustrée aux figures 1b et 3, chaque module est constitué de plaques individuelles en métal en forme de C (demi C ou indépendantes) maintenues espacées les unes des autres. Une telle forme de réalisation est plus avantageuse en ce qui concerne le plan des pertes en fer et est plus facile à mettre en oeuvre.

Pour assurer le déplacement de va et vient à la plaque (1) et en conséquence du guide-fil (5,6) porté par cette plaque, les plots de chaque circuit élémentaire (2a,2b) doivent donc être alternativement décalés d'un demi-pas magnétique d'un circuit (2a) au circuit consécutif (2b), ce décalage étant obtenu par l'écartement des modules élémentaires qui, en pratique, sont identiques.

Pour assurer un bon fonctionnement, il convient que la plaque aimantée mobile (1) ait une longueur telle qu'elle couvre deux éléments de stator (2a, 2b) permettant ainsi de commander le moteur de la même façon qu'un moteur pas à pas biphasé.

Dans une autre forme de réalisation, une autre manière d'assurer le fonctionnement consiste à disposer les modules en vis-à-vis sans décalage et à avoir une plaque aimantée dont l'alternance Nord/Sud de l'un de ses côtés soit décalé d'un demi-pas magnétique par rapport à celle de l'autre côté.

Pour assurer un bon fonctionnement, il convient que la plaque aimantée mobile (1) ait une longueur telle qu'elle couvre deux éléments de stator (2a,2b) permettant ainsi de commander le moteur de la même façon qu'un moteur pas à pas biphasé. Pour recevoir un couple constant, la plaque aimant aura une longueur au moins égale à celle d'un module, et de préférence une longueur multiple de celle d'un module.

Chaque combinaison d'alimentation des deux phases crée une position stable pour l'aimant mobile (1) correspondant à la meilleure coïncidence possible des pôles dudit aimant avec ceux du stator. L'enchaînement par commutation de ces combinaisons fait déplacer l'aimant mobile (1) vers des positions stables et successives, ce qui permet de commander ces mouvements en envoyant dans le moteur les séquences appropriées.

On peut ainsi effectuer le pilotage selon le mode classique des moteurs pas à pas en pas entiers, demi-pas ou micro-pas.

Le nombre de plots et la longueur des éléments du stator sont définis en fonction de la force de traction souhaitée.

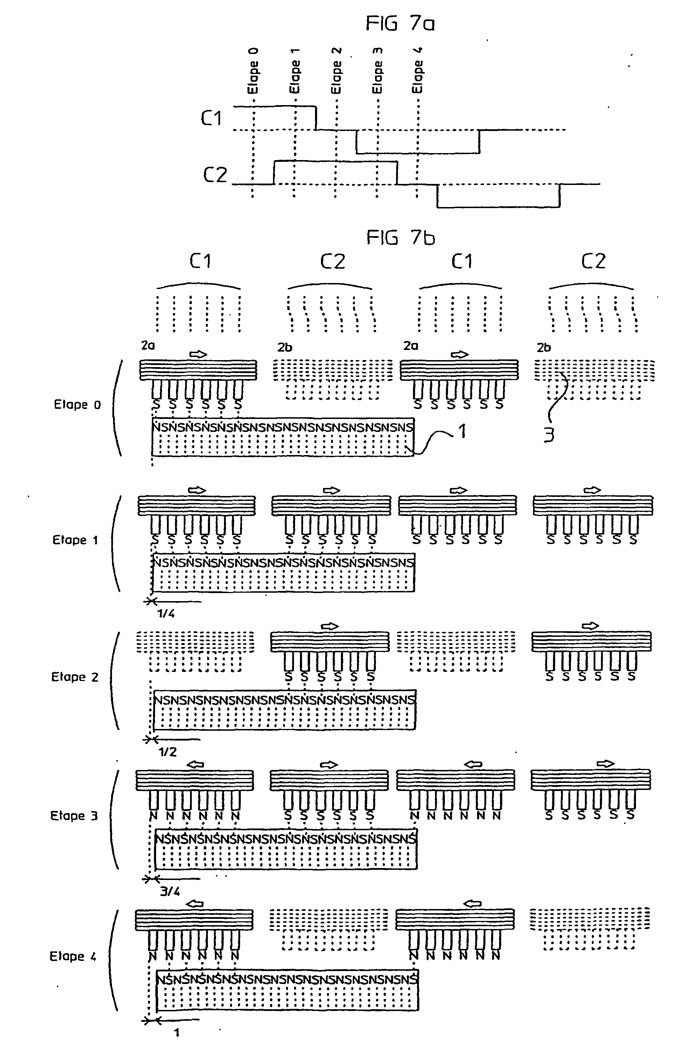

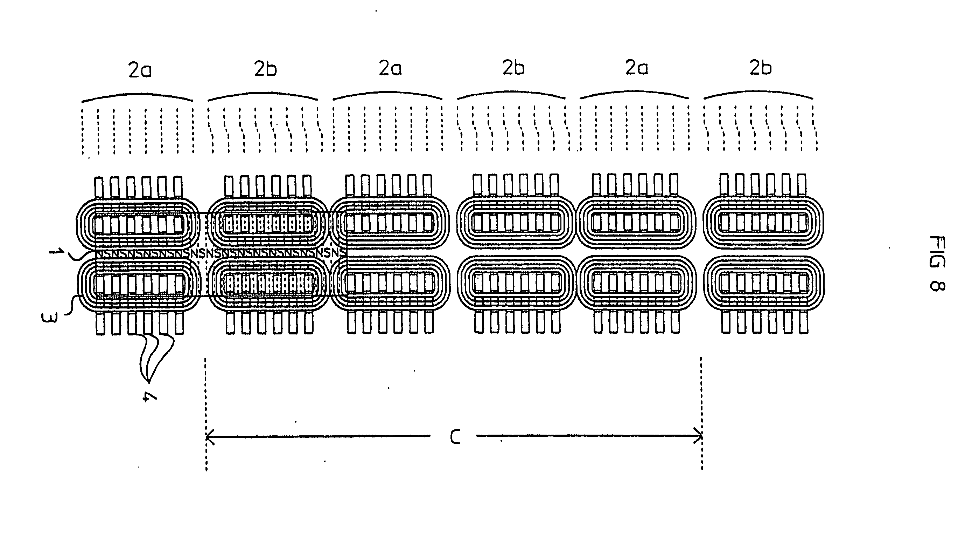

Le fonctionnement d'un tel moteur linéaire pas à pas tel qu'illustré par les figure 7a et 7b, qui montrent un moteur conçu à partir de quatre modules élémentaires, ce nombre n'étant pas limitatif, et pouvant être de six tel que représenté à la figure 8.

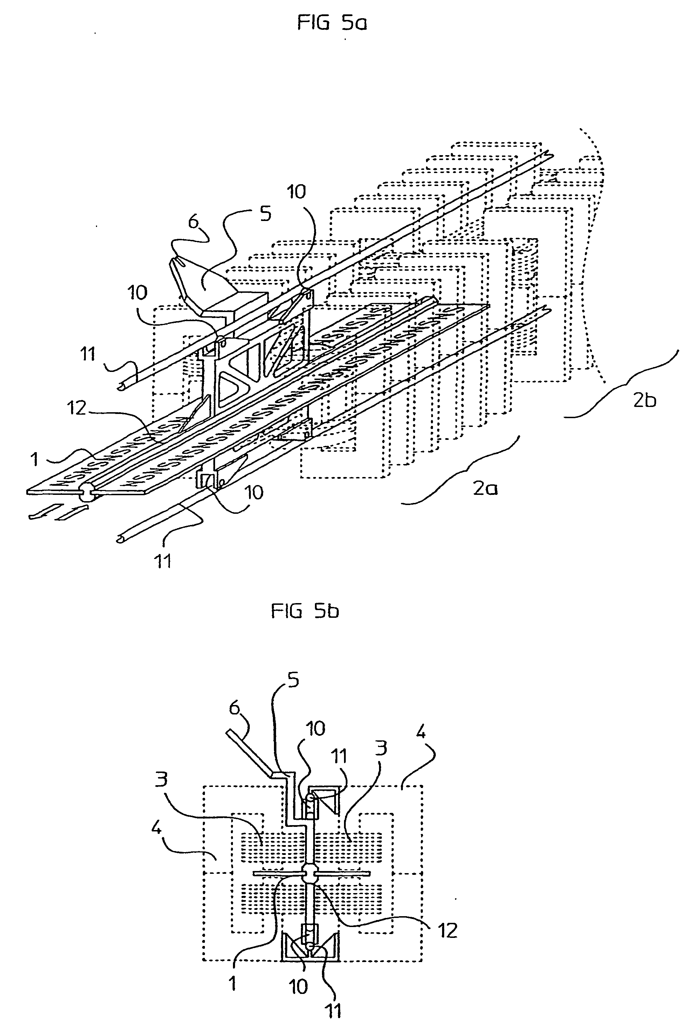

Dans l'exemple tel qu'illustré par les figures 17 et 18, le moteur est conçu à partir de six modules élémentaires, formant deux couples d'éléments (2a,2b) opposés, ce nombre n'étant pas limitatif. Ainsi, la figure 5 illustre le cas d'une réalisation comportant quatre modules.

Chaque module élémentaire (2a,2b) comporte donc un stator en forme de C ayant une largeur totale de 48 mm, les plots (P) réalisés dans ce stator étant au nombre de six ayant une largeur de 2 mm et une longueur de 6 mm, et étant séparés les uns des autres d'un espace ou encoche (E) de 4 mm.

L'entrefer entre deux plots (P1,P2) disposés en regard, est de 1 mm.

La plaque aimantée (1) a, quant à elle, une épaisseur comprise entre 0,6 et 0,8 mm et une longueur de 96 mm. Sa largeur est de l'ordre de 20 mm.

Dans les figures 7a et 7b, un seul côté est représenté, mais de préférence on réalise une disposition symétrique telle que réillustrée à la figure 8 en disposant des éléments identiques en vis-à-vis de façon strictement symétrique par rapport à l'axe de l'aimant plat (1).

Chaque élément (2a,2b) est donc formé d'un circuit magnétique qui présente des encoches (E) et des plots (P1, P2).

L'entraxe entre deux plots consécutifs est donc égal à deux fois la distance entre deux pôles Nord/Sud consécutifs réalisés sur l'aimant plat (voir figure 2).

Chaque élément représenté dans la forme de réalisation comporte donc six plots. Un tel nombre de plots n'est pas limitatif, et il est bien entendu possible de réaliser des modules possédant un nombre de plots quelconque choisi en fonction de la force et de la puissance souhaitée.

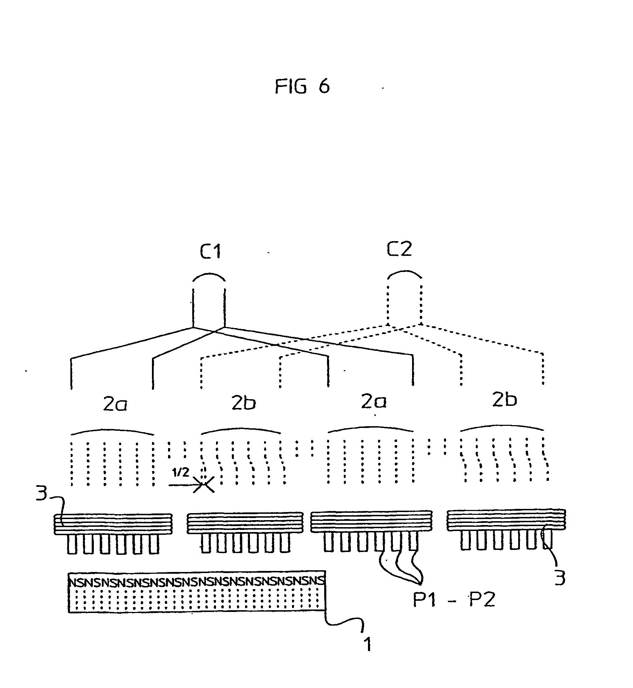

L'arrangement des modules constituant donc le moteur est schématisé, par exemple, aux figures 4a à 4c et à la figure 6. Les éléments de deux modules consécutifs (2a) sont espacés d'un nombre entier de paires de pôles Nord/Sud (N/S) de l'aimant, et ce de telle sorte que quelle que soit la position de l'aimant (1), les plots se trouvent tous en vis-à-vis d'un pôle de même signe. Il convient de noter que dans le moteur conforme à l'invention, le moteur est constitué d'une alternance de modules (2a) et (2b) tel que les éléments (2b) présentent des plots qui sont tous décalés d'un demi-pas du même côté, sur l'exemple vers la droite, par rapport aux éléments (2a).

De cette façon, lorsque l'aimant (1) est positionné de telle sorte que ses pôles d'un même signe soient alignés avec les encoches (E) et plots des éléments (2a), ces mêmes pôles tombent entre deux plots des éléments pairs (2b). Réciproquement, lorsque l'aimant (1) est positionné de telle sorte que ces pôles d'un même signe soient alignés avec les plots et encoches des éléments (2b), ces mêmes pôles tombent entre deux plots des éléments (2a).

Le branchement électrique d'un tel moteur, illustré par la figure 6, est réalisé de la manière suivante.

Toutes les bobines (3) des éléments (2a) sont branchées ensemble en C1 sur un système d'alimentation et toutes les bobines (3) des éléments (2b) sont branchées sur un ensemble (C2) sur un autre système d'alimentation. Ces systèmes d'alimentation envoient sur les bobines (3) des tensions et courants contrôlés par microprocesseurs selon une séquence appropriée.

Le branchement prévu dans la forme de réalisation illustrée est réalisé en parallèle, mais il pourrait aussi être fait en série.

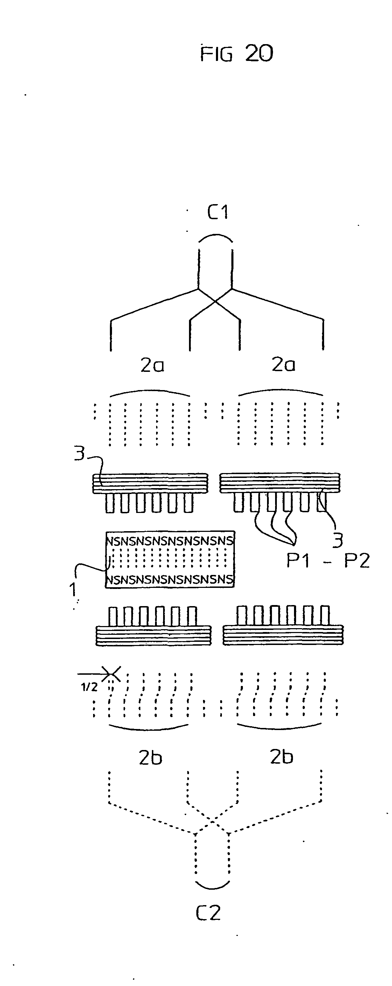

La séquence de fonctionnement d'un tel moteur est la suivante et ressort des figures 7a et 7b ou 20, 21a, 21b.

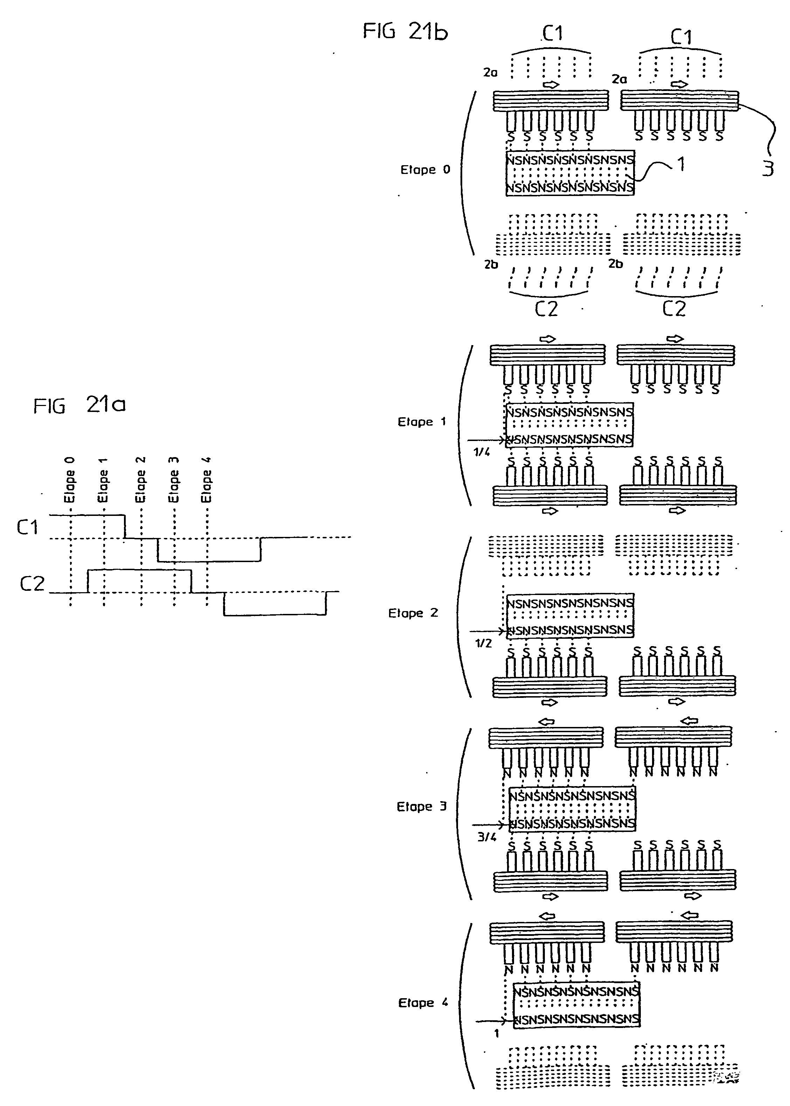

Dans un mode de fonctionnement classique dit "pas à pas", le circuit électronique de commande injecte dans les bobines (2a,2b) les courants représentés au diagramme illustré à la figure 7a ou 21a.

Un tel fonctionnement pas à pas ressort de la figure 7b ou 21b et comporte donc les étapes suivantes.

### Etape O :

Les bobines des éléments (2a) sont alimentés de sorte de faire apparaître un pôle, (par exemple Sud sur le diagramme) sur leurs plots. Les éléments (2b) ne sont pas alimentés. L'aimant (1) va donc se positionner pour aligner ses pôles Nord sur les pôles Sud des plots (P1) des éléments (2a).

### Etape 1 :

On alimente les bobines des éléments (2b) de sorte de faire apparaître un pôle (par exemple Sud sur le diagramme), l'aimant plat va se positionner de sorte que les forces d'attraction sur les deux séries de plots s'équilibrent. Dans l'exemple du diagramme, l'aimant (1) va donc se déplacer d'un quart de pas magnétique vers la droite. On observera que si l'on avait fait apparaître un pole Nord, l'aimant se serait déplacé d'un quart de pas vers la gauche.

### Etape 2 :

On coupe l'alimentation des bobines (2a). L'aimant va aligner ses pôles Nord en face des plots (P1) des éléments (2b). Par suite, il avance encore d'un quart de pas vers la droite.

### Etape 3 :

On alimente les éléments (2a) de sorte de faire apparaître un pôle de signe opposé à celui de l'avant dernière étape (Nord dans l'exemple du diagramme). Comme dans l'étape 1, l'aimant va se positionner de sorte que les forces de traction s'équilibrent entre tous les éléments. Dans l'exemple du diagramme, l'aimant avance encore d'un quart de pas vers la droite.

### Etape 4 :

On coupe l'alimentation des éléments (2b), l'aimant vient maintenant aligner ses pôles Sud en vis-à-vis des plots des éléments (2a).

A l'issu de cette séquence de quatre étapes, l'aimant se sera déplacé quatre fois d'un quart de pas, soit d'un pas complet c'est-à-dire de la distance entre deux pôles N - S successifs. On retrouve donc une situation similaire à l'étape 0, mais avec les polarités de signe inversé).

En poursuivant la séquence :
Etape 5 : on alimente 2b (pôle Nord)
Etape 6 : on coupe 2a
Etape 7 : on alimente 2a (pôle Sud)
Etape 8 : on coupe 2b

A l'issu de cette nouvelle séquence, l'aimant a, à nouveau, progressé d'un pas magnétique.

.... Et ainsi de suite. L'ordre de la séquence détermine le sens de déplacement, la fréquence de commutation détermine la vitesse de déplacement.

Ce mode de pilotage "simple pas" est similaire à celui du pilotage des moteurs pas à pas classiques. Ce même type de moteur peut donc être piloté par les circuits électroniques conventionnels destinés aux pilotages des moteurs pas à pas linéaires ou rotatifs. Comme pour les autres moteurs pas à pas, ces circuits électroniques peuvent permettre d'effectuer un pilotage en "demi pas" ou en "micro pas" pour améliorer la précision ou la performance du moteur en optimisant la tension et le courant dans les bobinages en fonction des vitesses et des accélérations exigées.

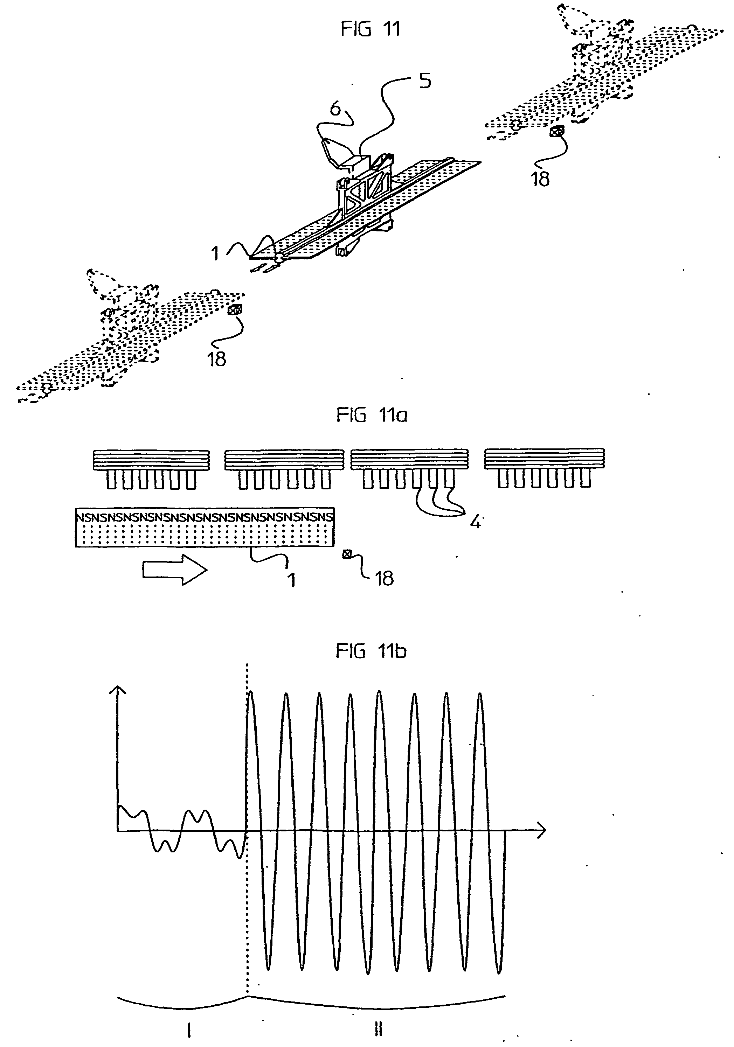

Pour assurer le contrôle et la commande de l'inversion du sens de va et vient, des moyens de détection de la position du guide-fil sont associés à l'ensemble conforme à l'invention. De tels moyens de détection peuvent être constitués par une cellule photo-électrique (13-14), un miroir (15) associé à un capteur laser (16), et sont avantageusement constitués ainsi que cela ressort de la figure 11, par un ou plusieurs capteurs par sonde à effet Hall (18).

La figure 11 montre comment est disposée une sonde (18) à effet Hall fixe, à proximité du passage de l'aimant plat (1), pour détecter ledit passage et en mesurer le déplacement. Cette sonde à effet Hall (18) délivre un signal proportionnel au champ magnétique.

Ainsi que cela ressort de la figure 11a, le capteur (18) à effet Hall est de préférence situé dans une zone comprise entre deux éléments consécutifs (2a,2b) afin que les flux issus des bobines ne perturbent pas la mesure.

La figure 11b montre la courbe du signal lors de l'arrivée de l'aimant (1). Avant l'arrivée de l'aimant, la sonde à effet Hall (18) capte les signaux issus des champs magnétiques de fuite provenant des éléments de stator (2a,2b). Dès que l'aimant (1) passe devant la sonde (18), le signal présente un front puis des alternances qui traduisent le défilement de ses pôles Nord/Sud - Nord/Sud.

Par détection du premier front de signal, on capte l'arrivée de l'aimant (1) devant la sonde (18), ce qui permet d'initialiser et recaler l'ensemble des comptages destinés à mesurer la position de l'aimant (1).

Par détection des alternances successives, on mesure le passage des pôles et par comptage des pas, on peut déterminer ainsi la position et le déplacement de l'aimant et contrôler que le mouvement dudit aimant est bien conforme à la séquence de commande. Ce dispositif constitue un moyen de détection de perte de pas éventuelle.

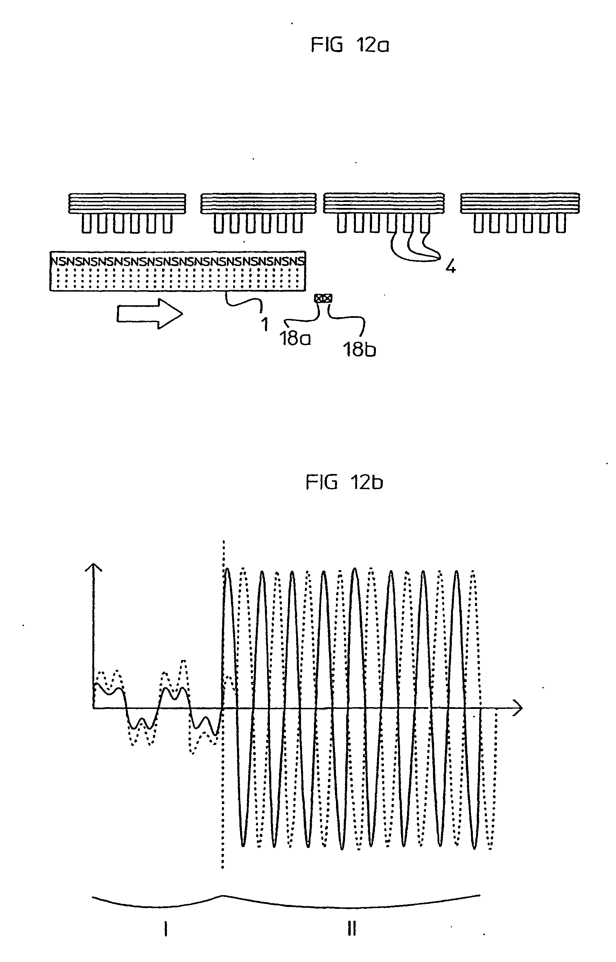

Il est également possible de réaliser une détection par plusieurs capteurs décalés, tel que cela ressort des figures 12a,12b.

La figure 12a illustre la disposition de deux capteurs (18a,18b), décalés d'un demi-pas magnétique.

Par un traitement simple, ce deuxième capteur (18b) permet de doubler (ou tripler avec trois capteurs...) la précision de mesure de la positon de l'aimant (1).

Par un traitement plus sophistiqué, il est possible d'interpoler les deux (ou plus) signaux pour obtenir une évaluation précise de la position de l'aimant. La précision est alors de l'ordre d'une fraction de pas et permet aux électroniques de pilotages d'effectuer un asservissement très précis de la position de l'aimant (1).

Dans l'exemple de fonctionnement décrit précédemment, l'alimentation est donc réalisée en biphasé.

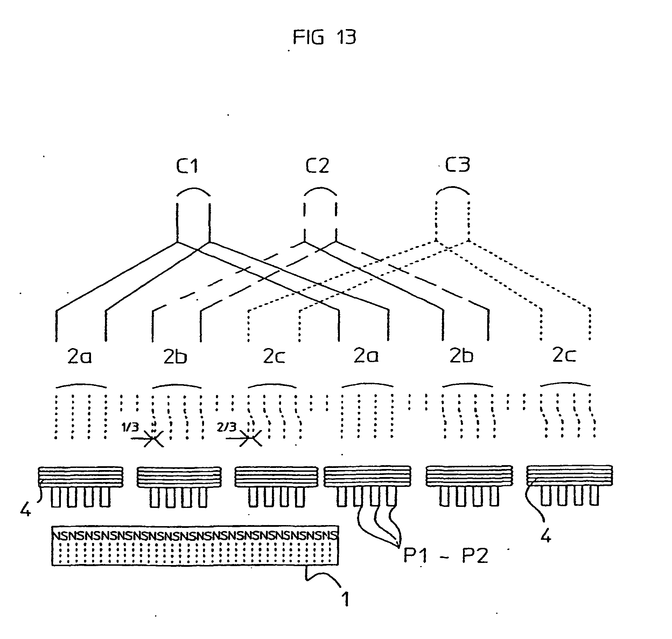

La figure13 illustre une forme de réalisation dans laquelle l'alimentation est réalisée dans une configuration triphasée. Dans cette forme de réalisation, par mesure de simplification, une seule série de modules élémentaires est représentée mais un ensemble identique peut être monté de manière symétrique par rapport à l'axe longitudinal de l'aimant plat (1) comme décrit précédemment pour le dispositif alimenté en biphasé.

Comme pour une alimentation en biphasé, chaque module est formé de circuits magnétiques qui présentent des plots et des encoches. Le pas des encoches est égal à deux fois la distance entre deux pôles Nord/Sud successifs sur l'aimant plat (1), cette distance étant désignée par l'expression "pas". Chaque module élémentaire (2a,2b,2c,2a..) est dans cette forme d'exemple représenté avec quatre plots par module, mais il est évident qu'il serait envisageable d'avoir un nombre de plots différent en fonction de la force ou de la puissance souhaitée.

Dans cet exemple de réalisation avec alimentation en triphasé, le dispositif conforme à l'invention comporte donc au moins quatre modules (2a,2b,2c,2a..) identiques.

Les modules (2a,2b,2c) sont disposés de manière à ce que les plots d'un module (2a) par rapport à un module (2b) et par rapport à un module (2c) soient décalés d'un tiers de pas magnétique. La longueur de la plaque aimantée est, dans cette forme de réalisation, équivalente à la longueur d'un ensemble de trois modules (2a,2b,2c) pour une course correspondant donc au minimum à la longueur d'un module.

Ainsi, les modules (2a) qui créent les circuits magnétiques (4a) sont espacés d'un nombre entier de paires de pôles Nord/Sud de l'aimant, de sorte que quelle que soit la position de l'aimant (1), les encoches se trouvent toutes en vis-à-vis d'un pôle du même signe. Les modules (2b) sont quant à eux disposés de telle sorte que les encoches soient toutes décalées d'un tiers de pas du même côté, à savoir vers la droite dans l'exemple. Les modules (2c) sont quant à eux positionnés de telle sorte que les encoches soient toutes décalées de deux tiers de pas du même côté, à savoir sur la droite.

Dans un tel ensemble, lorsque l'aimant (1) est positionné de telle sorte que les pôles d'un même signe soient alignés avec les plots d'un groupe d'aimants, ces pôles sont décalés d'un tiers de pas vers la droite par rapport à un deuxième groupe et d'un tiers de pas vers la gauche par rapport au troisième groupe.

Le branchement électrique d'un moteur réalisé conformément à l'invention est le suivant.

Toutes les bobines (3) des modules (2a) sont branchées ensemble en C1, toutes les bobines (3) des modules (2b) sont branchées quant à elles en C2 et toutes les bobines des modules (2c) sont branchées en C3.

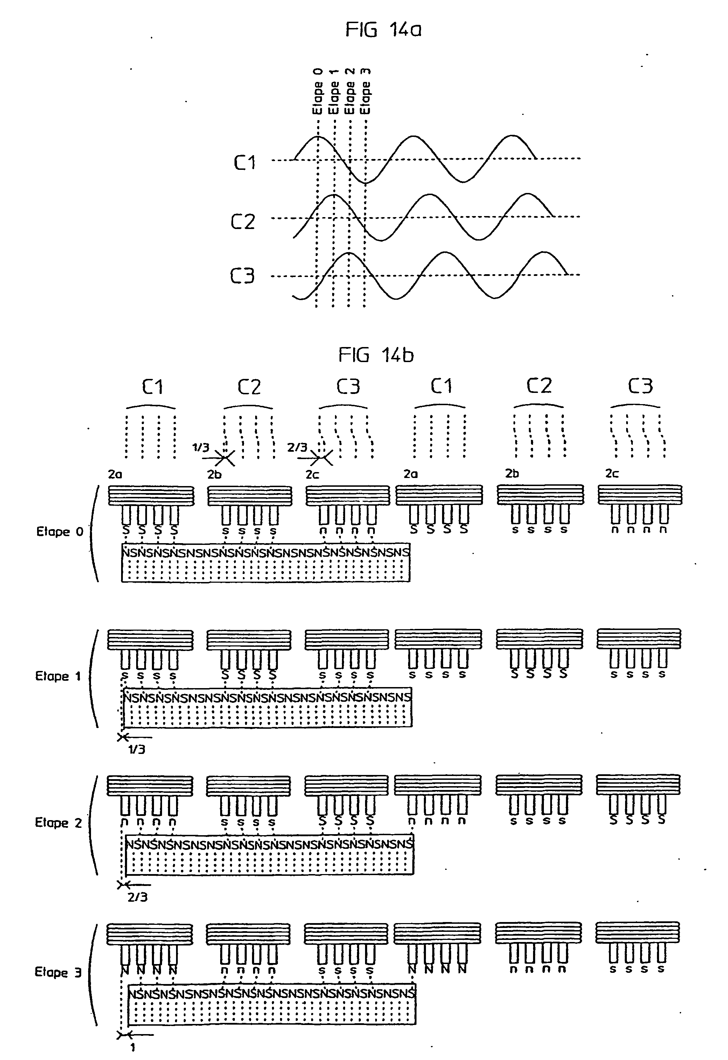

Le branchement peut être réalisé en série ou en parallèle, branchement qui est représenté sur la figure 14b.

Le fonctionnement d'un tel ensemble est le suivant.

Dans un mode de fonctionnement classique, similaire à celui des moteurs synchrones triphasés (ou brushless), le circuit électronique de commande injecte dans les bobines (C1,C2 et C3) les courants représentés sur diagramme (14a).

A titre indicatif, ce fonctionnement est expliqué figure 14b.

### Etape 0 :

Les bobines (2a) sont alimentées de sorte de faire apparaître un pôle d'intensité maximum (par exemple SUD sur le diagramme) sur leurs plots. L'aimant va se positionner pour aligner ses pôles NORD sur les pôles SUD des plots présentant le flux magnétique maximum, ce qui correspond à une position où les forces d'attraction sur les autres éléments s'équilibrent.

### Etape 1 :

Les trois courants ont évolué de sorte qu'on alimente les bobines des éléments (2b) de sorte de faire apparaître un pôle d'intensité maximale (par exemple SUD sur le diagramme). L'aimant va se positionner pour aligner ses pôles NORD sur les pôles SUD des plots présentant le flux magnétique maximum, ce qui correspond à une position où les forces d'attraction sur les autres éléments s'équilibrent. L'aimant s'est déplacé vers la droite d'un deuxième tiers de pas.

### Etape 2 :

Les trois courants ont évolué de sorte qu'on alimente les bobines des éléments (2c) de sorte de faire apparaître un pôle d'intensité maximale (par exemple SUD sur le diagramme). Les autres éléments sont alimentés par des courants égaux (en valeur absolue) et plus faibles. L'aimant va se positionner pour aligner ses pôles NORD sur les pôles SUD des plots présentant le flux magnétique maximum, ce qui correspond à une position où les forces d'attraction sur les autres éléments s'équilibrent. L'aimant s'est déplacé vers la droite d'un deuxième tiers de pas.

### Etape 3 :

Les trois courants ont évolué de sorte qu'on alimente les bobines des éléments (2a) de sorte de faire apparaître un pôle d'intensité maximale opposé à celui du pas 0 (maintenant NORD sur le diagramme). Les autres éléments sont alimentés par des courants égaux (en valeur absolue) et plus faibles. L'aimant va se positionner pour aligner ses pôles SUD sur les pôles NORD des plots présentant le flux magnétique maximum, ce qui correspond à une position où les forces d'attraction sur les autres éléments s'équilibrent. L'aimant s'est déplacé vers la droite d'un troisième tiers de pas.

A l'issu de cette séquence de trois étapes, l'aimant se sera déplacé trois fois d'un tiers de pas, soit d'un pas complet (distance entre deux pôles N - S successifs). On retrouve donc une situation similaire à l'étape 0, mais avec les polarités de signe inversé.

....Et ainsi de suite. L'ordre des phases détermine le sens de déplacement, la fréquence de commutation détermine la vitesse de déplacement.

Ce mode de pilotage est similaire à celui utilisé pour le pilotage des moteurs synchrones triphasés classiques ou des moteurs brushless. Ce type de moteur peut donc être piloté par les circuits électroniques conventionnels destinés par exemple aux pilotages des moteurs brushless, notamment ceux utilisés en servomoteurs. Comme pour les autres moteurs synchrones ou brushless, ces circuits électroniques peuvent permettre d'effectuer un pilotage en boucle fermé grâce à des capteurs de positions, des résolveurs ou des codeurs pour améliorer la précision ou la performance du moteur en optimisant la tension et le courant dans les bobinages en fonction des vitesses et des accélérations exigées.

L'utilisation des sondes à effet Hall proposé précédemment trouve donc là tout son intérêt.

Le dispositif conforme à l'invention présente de très grands avantages par rapport aux solutions antérieures.

En effet, la particularité du type de moteur linéaire utilisé pour assurer le déplacement du guide-fil réside dans le fait que seuls les modules qui sont placés en vis-à-vis de l'aimant sont actifs. Par suite, les autres éléments ou modules peuvent être déconnectés pendant tout le temps où l'aimant est en dehors de leur portée.

Cette particularité est particulièrement intéressante dans le cas des mouvements de va et vient. En effet, pour obtenir un retournement rapide, il faut que le moteur fournisse des forces électromagnétiques importantes, lesquelles forces imposent d'appliquer aux bobines des intensités de courant importantes (la force dépend du flux magnétique et donc du courant dans les bobines).

Les courants très importants appliqués aux enroulements provoquent un échauffement tel qu'il peut conduire rapidement à la destruction du moteur. Pour éviter ce problème, on connaît la méthode qui consiste à ne maintenir ces courants élevés que pendant les phases transitoires de démarrage et d'arrêt.

Dans le cas du moteur linéaire modulaire proposé, il est possible de couper complètement l'alimentation des éléments dès que l'aimant les a quittés, ce qui laisse aux bobines le temps de se refroidir. Grâce à cette configuration modulaire, les enroulements travaillent qu'une fraction du temps et peuvent donc subir pendant cette fraction de temps des courants plus élevés et donc proposer des performances supérieures par rapport aux moteurs où les enroulements sont toujours actifs.

Un tel dispositif est par ailleurs utilisable pour n'importe quel type de système de renvidage autour d'une bobine support dans lequel la distribution du fil doit être réalisée au moyen d'un système de va-et-vient.

## Revendications

1. Dispositif permettant d'assurer le renvidage, à grande vitesse, d'un fil sur un support (7) entraîné en rotation et comportant un système de distribution du fil, **composé d'un guide-fil de dépose (6) et d'un élément mobile ou curseur (5)** déplacé selon un mouvement de va et vient parallèlement à la surface dudit support (7) avec décélération et accélération rapides au point d'inversion du mouvement de va et vient le déplacement du guide-fil de dépose (6) étant réalisé par l'intermédiaire **de** l'élément mobile ou curseur (5) associé à une plaque aimantée (1) d'un moteur linéaire, alimenté en courant biphasé ou triphasé, **caractérisé en ce que** le stator du moteur linéaire est constitué par au moins un ensemble de modules élémentaires (2a,2b,2c) disposés soit face à face soit dans le prolongement les uns de autres, comportant chacun une pluralité de circuits magnétiques (4) en forme de C qui définissent entre les extrémités de leurs branches espacées un entrefer à l'intérieur duquel est positionnée la plaque aimantée (1), comportant une alternance de pôles Nord et Sud (N et S), qui constitue l'élément mobile déplaçant le curseur (5) portant le guide-fil (6) et dans lequel :
• les circuits magnétiques (4) de chaque module élémentaire (2a,2b,2c) sont constitués par une pluralité de paires de plots (P1,P2) disposés en regard l'un de l'autre dans chaque paire, chaque série de plots (P1) et (P2) étant associés à une bobine (3) pour constituer un champ magnétique dans l'entrefer qu'ils définissent, le pas (E) entre deux plots consécutifs correspondant à deux fois la distance entre deux pôles Nord/Sud (N/S) successifs prévus sur l'aimant plat (1),
• les plots d'un module connecté à une même phase de l'alimentation électrique sont décalés par rapport aux plots connectés à l'autre ou aux autres phases d'une valeur correspondant au pas magnétique divisé par le nombre de phases ;
• la plaque aimantée (1) est dimensionnée pour pouvoir être insérée dans l'entrefer d'au moins un module élémentaire de chacune des phases d'alimentation, notamment en longueur pour couvrir deux modules (en biphasée) ou trois modules (en triphasé) alignés, ou notamment en largeur pour couvrir deux modules (en biphasé) placés en vis à vis, ladite plaque comportant sur ses deux faces, une alternance de pôles Nord/Sud (N/S) espacés d'une distance correspondant à au moins la demi-distance comprise entre deux plots consécutifs.
• des moyens (10,11) sont prévus pour assurer le maintien de la plaque aimantée (1) strictement dans le plan médian de l'entrefer du circuit magnétique.

2. Dispositif selon la revendication 1, dans lequel l'alimentation électrique est réalisée en courant biphasé (C1,C2), **caractérisé en ce qu'**il comporte au moins trois modules élémentaires (2a,2b,2a) alignés, les plots (Plb,P2b) du module (2b) étant décalés d'un demi-pas magnétique, du même côté, par rapport aux plots (P1a, P2a) du module (2a) précédent et du module (2a) suivant qui lui est associé.

3. Dispositif selon la revendication 1, dans lequel l'alimentation électrique est réalisée en courant triphasé (C1,C2,C3), **caractérisé en ce qu'**il comporte au moins quatre modules élémentaires (2a,2b,2a,2b) alignés, les plots du second module (2b) étant décalés d'un tiers de pas magnétique et du même côté par rapport aux plots du module précédent, et les plots du troisième module étant décalés d'un tiers de pas magnétique par rapport aux plots du second module (2b).

4. Dispositif selon l'une des revendications 1 à 3, **caractérisé en ce qu'**il comporte deux stators constitués de modules élémentaires alignés, lesdits stators étant montés symétriquement de part et d'autre d'un plan central de symétrie, la plaque aimantée (1) qui constitue l'élément mobile déplaçant le curseur supportant le guide-fil (6) comportant, disposé symétriquement par rapport à son axe longitudinal, sur ses deux faces et dans la zone située dans l'entrefer des plots, une alternance de pôles Nord et Sud disposés en correspondance, le guide-fil étant monté sur le curseur (5) fixé sur un renfort central (12) disposé dans le plan médian de ladite plaque aimantée entre les deux séries de pôles magnétiques.

5. Dispositif selon la revendication 1, **caractérisé en ce que** l'alimentation électrique est réalisée en courant biphasé, **caractérisé en ce qu'**il comporte au moins un couple de deux modules (2a, 2b) situés en vis-à-vis, respectivement connectés à chacune des deux phases, les plots de l'un des modules étant décalés d'un demi-pas magnétique par rapport aux plots du module qui lui fait face.

6. Dispositif selon l'une quelconque revendications 1, 2, et 5, **caractérisé en ce qu'**il comporte une pluralité de couples de modules (2a,2b) opposés permettant d'obtenir une course quelconque :
- les modules connectés à une phase étant disposés de sorte que leurs plots soient espacés d'un nombre entier de paires de pas magnétiques afin que quelle que soit la position de l'aimant, leurs plots soient en vis-à-vis d'un pôle de même signe ;
- les modules connectés à l'autre phase sont disposés de sorte que leurs plots soient espacés d'un nombre entier de paires de pas magnétiques, et donc de sorte que quelle que soit la position de l'aimant, leurs plots soient en vis-à-vis d'un pôle de même signe, et qu'ils soient tous décalés d'un demi-pas magnétique et dans le même sens par rapport aux plots des modules connectés à la première phase.

7. Dispositif selon la revendications 5 ou 6, **caractérisé en ce que** tous le modules raccordés à une même phase sont alignés d'un même côté de l'aimant.

8. Dispositif selon la revendication 5 ou 6, **caractérisé en ce qu'**il comporte une alternance de modules (2a,2b) de sorte que de chaque côté de l'aimant, les modules alignés soient connectés aux deux phases alternativement, chacun ayant en vis-à-vis un module connecté à la phase opposée.

9. Dispositif selon les revendications 1 et 5, **caractérisé en ce que** tous les modules peuvent être placés en vis-à-vis et alignés sans aucun décalage, la plaque aimantée présentant alors de part et d'autre de son axe de symétrie une alternance de pôles Nord/Sud décalés d'un demi-pas magnétique, et dans ce cas, tous les modules situés d'un même côté de l'aimant sont connectés à la même phase.

10. Dispositif selon l'une des revendications 1 à 9, c**aractérisé en ce** les circuits magnétiques (4) en forme de C de chaque module élémentaire sont réalisés dans un ensemble monobloc par usinage ou moulage d'encoches en creux pour définir des plots (P1,P2) consécutifs disposés par paires en regard l'un de l'autre et définissant entre eux un entrefer.

11. Dispositif selon l'une des revendications 1 à 9, **caractérisé en ce que** les circuits magnétiques (4) en forme de C de chaque module élémentaire sont constitués par une succession de plaques en forme de C séparées les unes des autres.

12. Dispositif selon l'une des revendications 1 à 11, **caractérisé en ce que** les modules élémentaires (2a,2b) (ou 2a,2b,2c) sont identiques, le décalage d'un demi-pas magnétique ou d'un tiers de pas magnétique des plots d'un module par rapport aux plots du module précédent en vis à vis étant obtenu par l'écartement des modules élémentaires entre eux.

13. Dispositif selon l'une des revendications 1 à 12, **caractérisé en ce qu'**il comporte des moyens de guidage (10,11) du curseur (5) portant le guide-fil (6), moyens qui maintiennent la position de la plaque aimantée dans l'entrefer des stators et s'opposent aux efforts d'attraction entre les aimants et les pôles du circuit magnétique.

14. Dispositif selon la revendication 13, **caractérisé en ce que** les moyens de guidage sont constitués par des jeux de galets (10) placés sur le curseur (5) et circulant sur des guides (11) s'étendant sur toute la longueur du système de distribution.

15. Dispositif selon l'une des revendications 1 à 14, **caractérisé en ce que** le contrôle et la commande de l'inversement du sens de va-et-vient du guide-fil (6) est obtenu par l'intermédiaire de moyens de détection (13-16,18) de la position du curseur portant le guide-fil.

16. Dispositif selon la revendication 15, **caractérisé en ce que** les moyens de détection de la position du curseur sont constitués par un ou plusieurs capteurs par sonde (18) à effet Hall fixe, disposé(s) à proximité du passage de l'aimant plat (1) constituant l'élément mobile déplaçant le guide-fil, cette sonde (18) délivrant un signal proportionnel au champ magnétique.

17. Dispositif selon la revendication 16, **caractérisé en ce que** le signal délivré par la sonde (18) à effet Hall est traité de façon à détecter l'arrivée de l'aimant (1) par l'apparition d'un premier front et ensuite son déplacement par comptage des alternances résultant du défilement des pôles Nord et Sud dudit aimant.

18. Dispositifs selon l'une des revendications 1 à 16, comportant un grand nombre de modules pour offrir une course importante, **caractérisé en ce que** seuls les modules qui sont placés en vis à vis de la plaque aimantée (1) sont alimentés, les autres éléments ou modules étant déconnectés pendant tout le temps où l'aimant est en dehors de leur portée permettant ainsi leur refroidissement.

## Claims

1. Device for winding, at high speed, a yarn onto a rotating support (7) and comprising a yarn delivery system composed of a depositing yarn guide (6) and of a moving element or cursor (5) displaced so as to undergo a to-and-fro movement parallel to the surface of said support (7) with rapid deceleration and acceleration at the point of reversal of the to-and-fro movement, the depositing yarn guide (6) being displaced by means of the moving element or cursor (5) associated with a magnetized plate (1) of a linear motor, supplied with two-phase or three-phase current, **characterized in that** the stator of the linear motor is formed by at least one assembly of elementary modules (2a, 2b, 2c) placed either face to face or placed so that each lies in the extension of another, each having a plurality of C-shaped magnetic circuits (4) that define, between the ends of their separated legs, an airgap inside which the magnetized plate (1) is positioned, comprising an alternation of North and South poles (N and S), which constitutes the moving element that displaces the cursor (5) carrying the yarn guide (6) and in which:
· the magnetic circuits (4) of each elementary module (2a, 2b, 2c) are formed by a plurality of pairs of posts (P1, P2) placed opposite each other in each pair, each series of posts (P1) and (P2) being associated with a coil (3) in order to form a magnetic field in the airgap that they define, the spacing (E) between two consecutive posts corresponding to twice the distance between two consecutive North/South poles (N/S) provided on the flat magnet (1);
· the posts of a module that are connected to one and the same phase of the electrical supply are offset relative to the posts that are connected to the other phase or other phases by a value corresponding to the magnetic step divided by the number of phases;
· the magnetized plate (1) has dimensions enabling it to be inserted into the airgap of at least one elementary module of each of the supply phases, especially a length in order to cover two aligned modules (with a two-phase supply) or three aligned modules (with a three-phase supply), or especially a width in order to cover two modules (with a two-phase supply) that are placed facing each other, said plate comprising, on both its faces, an alternation of North/South poles (N/S) spaced apart by a distance corresponding to at least the half-distance lying between two consecutive posts; and
· means (10, 11) are provided for keeping the magnetized plate (1) strictly in the mid-plane of the airgap of the magnetic circuit.

2. Device according to Claim 1, in which the electrical supply is a two-phase current supply (C1, C2), **characterized in that** it comprises at least three aligned elementary modules (2a, 2b, 2a), the posts (P1b, P2b) of the central module (2b) being offset by one half of the magnetic step, on the same side, relative to the posts (P1a, P2a) of the preceding module (2a) and of the following module (2a) which is associated therewith.

3. Device according to Claim 1, in which the electrical supply is a three-phase current supply (C1, C2, C3), **characterized in that** it comprises at least four aligned elementary modules (2a, 2b, 2a, 2b), the posts of the second module (2b) being offset by one third of the magnetic step and on the same side relative to the posts of the preceding module, and the posts of the third module being offset by one third of the magnetic step relative to the posts of the second module (2b).

4. Device according to one of Claims 1 to 3, **characterized in that** it comprises two stators consisting of aligned elementary modules, said stators being mounted symmetrically on either side of a central plane of symmetry, the magnetized plate (1), which constitutes the moving element that displaces the cursor supporting the yarn guide (6), having, placed symmetrically with respect to its longitudinal axis, on both its faces and in the region located in the airgap of the posts, an alternation of North and South poles that are placed in correspondence, the yarn guide being mounted on the cursor (5) fixed to a central reinforcement (12) lying in the mid-plane of said magnetized plate between the two series of magnetic poles.

5. Device according to Claim 1, in which the electrical supply is a two-phase current supply, **characterized in that** it comprises at least one pair of two modules (2a, 2b) facing each other, connected to each of the two phases respectively, the posts of one of the modules being offset by one half of the magnetic step relative to the posts of the module that faces it.

6. Device according to any one of Claims 1, 2 and 5, **characterized in that** it comprises a plurality of pairs of opposed modules (2a, 2b) making it possible to obtain any travel:
- the modules connected to one phase being placed in such a way that their posts are spaced apart by an integral number of pairs of magnetic steps so that, whatever the position of the magnet, their posts are facing a pole of the same sign; and
- the modules connected to the other phase are placed in such a way that their posts are spaced apart by an integral number of pairs of magnetic steps, and therefore in such a way that, whatever the position of the magnet, their posts are facing a pole of the same sign, and in such a way that they are all offset by one half of the magnetic step and in the same direction relative to the posts of the modules connected to the first phase.

7. Device according to Claim 5 or 6, **characterized in that** all the modules connected to any one phase are aligned on the same side of the magnet.

8. Device according to Claim 5 or 6, **characterized in that** it comprises an alternation of modules (2a, 2b) in such a way that, on each side of the magnet, the aligned modules are connected to the two phases alternately, each having, facing it, a module connected to the opposite phase.

9. Device according to Claims 1 and 5, **characterized in that** all the modules may be placed so as to face one another and in alignment without any offset, the magnetized plate then having, on either side of its axis of symmetry, an alternation of North/South poles offset by one half of the magnetic step, and in this case all the modules located on one and the same side of the magnet are connected to the same phase.

10. Device according to one of Claims 1 to 9, **characterized in that** the C-shaped magnetic circuits (4) of each elementary module are produced in a one-piece assembly by machining or moulding hollowed-out notches in order to define consecutive posts (P1, P2) placed in pairs opposite each other and defining an airgap between them.

11. Device according to one of Claims 1 to 9, **characterized in that** the C-shaped magnetic circuits (4) of each elementary module are formed by a succession of C-shaped plates separated from one another.

12. Device according to one of Claims 1 to 11, **characterized in that** the elementary modules (2a, 2b) (or 2a, 2b, 2c) are identical, the offset by one half of the magnetic step or by one third of the magnetic step of the posts of one module relative to the posts of the preceding module that faces it being obtained by the mutual spacing of the elementary modules.

13. Device according to one of Claims 1 to 12, **characterized in that** it includes means (10, 11) for guiding the cursor (5) carrying the yarn guide (6), which means keep the magnetized plate in position in the airgap of the stators and oppose the attractive forces between the magnets and the poles of the magnetic circuit.

14. Device according to Claim 13, **characterized in that** the guiding means are formed by sets of rollers (10) placed on the cursor (5), which rollers run along guides (11) that extend over the entire length of the delivery system.

15. Device according to one of Claims 1 to 14, **characterized in that** the reversal of the to-and-fro direction of the yarn guide (6) is commanded and controlled by means (13-16, 18) for detecting the position of the cursor carrying the yarn guide.

16. Device according to Claim 15, **characterized in that** the means for detecting the position of the cursor are formed by one or more sensors based on a fixed Hall-effect probe (18) which are placed near the passage for the flat magnet (1) constituting the moving element that displaces the yarn guide, this probe (18) delivering a signal proportional to the magnetic field.

17. Device according to Claim 16, **characterized in that** the signal delivered by the Hall-effect probe (18) is processed so as to detect the arrival of the magnet (1) by the appearance of a first front and then its displacement, by counting alternations resulting from the running of the North and South poles of said magnet.

18. Device according to one of Claims 1 to 16, comprising a large number of modules in order to provide a long travel, **characterized in that** only the modules that are placed facing the magnetized plate (1) are supplied, the other elements or modules being disconnected throughout the time when the magnet is outside of their range, thus allowing them to cool down.

## Patentansprüche

1. Vorrichtung zum schnellen Aufwickeln eines Fadens auf einen sich drehenden Halter (7), die ein Abzugssystem für den Faden besitzt, das aus einer Fadenführung (6) und aus einem beweglichen Element oder einem Ringläufer (5) besteht, der in einer Changierbewegung parallel zu der Oberfläche des Halters (7) mit rascher Verzögerung und rascher Beschleunigung am Umkehrpunkt der Changierbewegung verschoben wird, wobei die Bewegung bzw. die Verschiebung der Fadenführung (6) mit Hilfe eines beweglichen Elementes oder eines Ringläufers (5) durchgeführt wird, das bzw. der mit einer Magnetplatte (1) eines Linearmotors verbunden ist, welcher mit einem Zweiphasenstrom oder mit Drehstrom gespeist wird, **dadurch gekennzeichnet, dass** der Stator des Linearmotors aus mindestens einem Satz Grundmodule (2a, 2b, 2c) besteht, die entweder einander gegenüberliegend oder in ihren jeweiligen Verlängerungen angeordnet sind, und die jeweils eine Vielzahl von Magnetkreisen (4) in Form eines C besitzen, welche zwischen den Enden ihrer in einem bestimmten Abstand zueinander angeordneten Schenkel einen Luftspalt definieren, in dem sich die Magnetplatte (1) befindet, welche die Pole Nord und Süd (N und S) besitzt, und die das bewegliche Element darstellt, welches den Ringläufer (5), der die Fadenführung (6) aufnimmt, verschiebt, wobei :
- die Magnetkreise (4) jedes Grundmoduls (2a, 2b, 2c) aus einer Vielzahl von Steckstellen-Paaren (P1, P2) bestehen, die paarweise einander gegenüberliegend angeordnet sind, wobei jede Reihe von Steckstellen (P1) und (P2) mit einer Spule (3) verbunden ist, so dass in dem Luftspalt, den sie bilden, ein Magnetfeld entsteht, und der Abstand (E) zwischen zwei aufeinanderfolgenden Steckstellen dem doppelten Abstand zwischen zwei aufeinanderfolgenden Nord-/Süd-Polen (N/S) entspricht, die an dem Flachmagneten (1) vorgesehen sind,
- die Steckstellen eines Moduls, der mit einer gleichen Stromversorgungsphase verbunden ist, gegenüber den Steckstellen, die mit der anderen oder den anderen Phasen verbunden sind, um einen Wert versetzt sind, der dem magnetischen Abstand, geteilt durch die Anzahl der Phasen, entspricht;
- die Magnetplatte (1) so ausgelegt ist, dass sie in den Luftspalt mindestens eines Grundmoduls jeder der Stromversorgungs-Phasen, insbesondere der Länge nach, eingeschoben werden kann, um zwei genau ausgerichtete (Zweiphasen-) Module oder drei genau ausgerichtete (Drehstrom-) Module abzudecken, oder um zwei (Zweiphasen-) Module abzudecken, die einander gegenüber angeordnet sind, wobei die Platte auf ihren beiden Seiten die Pole Nord/Süd (N/S) aufweist, die in einem Abstand zueinander angeordnet sind, der mindestens dem halben Abstand zwischen zwei aufeinanderfolgenden Steckstellen entspricht.
- Elemente (10, 11) vorgesehen sind, um zu gewährleisten, dass die Magnetplatte (1) genau in der Mittelebene des Luftspaltes des Magnetkreises gehalten wird.

2. Vorrichtung nach Anspruch 1, bei der die Stromversorgung mit Zweiphasen-Strom (C1, C8) realisiert wird, **dadurch gekennzeichnet, dass** sie mindestens drei genau ausgerichtete Grundmodule (2a, 2b, 2c) besitzt, wobei die Steckstellen (P1b, P2b) des Moduls (2b) gegenüber den Steckstellen (P1a, P2a) des vorhergehenden Moduls (2a) und des nachfolgenden Moduls (2a), das mit ihm verbunden ist, auf der gleichen Seite um einen halben magnetischen Abstand versetzt sind.

3. Vorrichtung nach Anspruch 1, bei der die Stromversorgung mit Drehstrom (C1, C8, C3) realisiert wird, **dadurch gekennzeichnet, dass** sie mindestens vier genau ausgerichtete Grundmodule (2a, 2b, 2a, 2b) besitzt, wobei die Steckstellen des zweiten Moduls (2b) gegenüber den Steckstellen des vorhergehenden Moduls auf der gleichen Seite um ein Drittel des magnetischen Abstand versetzt sind, und die Steckstellen des dritten Moduls gegenüber den Steckstellen des zweiten Moduls (2b) um ein Drittel des magnetischen Abstandes versetzt sind.

4. Vorrichtung nach einem der vorhergehenden Ansprüche 1 bis 3, **dadurch gekennzeichnet, dass** sie zwei Statoren besitzt, die aus genau ausgerichteten Grundmodulen bestehen, wobei die Statoren symmetrisch zu beiden Seiten einer mittleren Symmetrieebene montiert sind, und die Magnetplatte (1), welche das bewegliche Element darstellt, das den Ringläufer verschiebt, welcher die Fadenführung (6) aufnimmt, symmetrisch gegenüber ihrer Längsachse angeordnet an den beiden Seitenflächen und in der Zone, welche sich im Luftspalt der Steckstellen befindet, die Pole Nord und Süd besitzt, die entsprechend angeordnet sind, wobei die Fadenführung an dem Ringläufer (5) montiert ist, welcher an einer Verstärkung in der Mitte (12) befestigt wurde, die in der Mittelebene der Magnetplatte zwischen den beiden Reihen von Magnetpolen angeordnet ist.

5. Vorrichtung nach Anspruch 1, **dadurch gekennzeichnet, dass** die Stromversorgung durch Zweiphasen-Strom realisiert wird, **dadurch gekennzeichnet, dass** sie mindestens ein Paar von zwei Modulen (2a, 2b) besitzt, welche einander gegenüber angeordnet und jeweils an eine der beiden Phasen angeschlossen sind, wobei die Steckstellen einer der Module gegenüber den Steckstellen des Moduls, das ihnen gegenüberliegt, um einen halben magnetischen Abstand versetzt sind.

6. Vorrichtung nach einem der vorhergehenden Ansprüche 1, 2 und 5, **dadurch gekennzeichnet, dass** sie eine Vielzahl von einander gegenüberliegenden Modul-Paaren (2a, 2b) besitzt, so dass man einen beliebigen Hub erhält :
- wobei die Module, die an eine Phase angeschlossen sind, derart angeordnet sind, dass ihre Steckstellen in einer ganzen Zahl von Paaren magnetischer Abstände beabstandet sind, damit sich ihre Steckstellen unabhängig von der Position des Magneten gegenüber einem Pol mit gleichem Vorzeichen befinden ;
- die Module, die an die andere Phase angeschlossen sind, sind so angeordnet, dass ihre Steckstellen in einer ganzen Zahl von Paaren magnetischer Abstände beabstandet sind, so dass sich ihre Steckstellen unabhängig von der Position des Magneten gegenüber einem Pol mit gleichem Vorzeichen befinden, und sie alle gegenüber den Steckstellen der Module, die an die erste Phase angeschlossen sind, in der gleichen Richtung um einen halben magnetischen Abstand versetzt sind.

7. Vorrichtung nach Anspruch 5 oder 6, **dadurch gekennzeichnet, dass** sämtliche Module, die an die gleiche Phase angeschlossen sind, an der gleichen Seite des Magneten ausgerichtet sind.

8. Vorrichtung nach Anspruch 5 oder 6, **dadurch gekennzeichnet, dass** sie alternierende Module (2a, 2b) besitzt, so dass die an jeder Seite des Magneten ausgerichteten Module alternativ an zwei Phasen angeschlossen sind, wobei jede gegenüberliegend ein Modul besitzt, das an die entgegengesetzt Phase angeschlossen ist.

9. Vorrichtung nach den Ansprüchen 1 und 5, **dadurch gekennzeichnet, dass** sämtliche Module einander gegenüberliegend angeordnet und ohne Versatz ausgerichtet werden können, wobei die Magnetplatte in dem Fall zu beiden Seiten ihrer Symmetrieachse die Pole Nord/Süd aufweist, die um einen halben magnetischen Abstand versetzt sind, und in diesem Fall sind sämtliche Module, die sich auf der gleichen Seite des Magneten befinden, an die gleiche Phase angeschlossen.

10. Vorrichtung nach einem der Ansprüche 1 bis 9, **dadurch gekennzeichnet, dass** die Magnetkreise (4) in Form eines C jedes Grundmoduls durch maschinelle Bearbeitung oder durch Formen von Hohlkerben in einer Blockeinheit hergestellt werden und aufeinanderfolgende Steckstellen (P1, P2) bilden, die paarweise einander gegenüberliegend angeordnet sind und zwischen sich einen Luftspalt bilden.

11. Vorrichtung nach einem der Ansprüche 1 bis 9, **dadurch gekennzeichnet, dass** die Magnetkreise (4) in Form eines C jedes Grundmoduls aus einer Folge von Platten in Form eines C bestehen, die voneinander getrennt sind.

12. Vorrichtung nach einem der Ansprüche 1 bis 11, **dadurch gekennzeichnet, dass** die Grundmodule (2a, 2b) (oder 2a, 2b, 2c) identisch sind, wobei der Versatz um einen halben magnetischen Abstand oder ein Drittel des magnetischen Abstandes der Steckstellen eines Moduls gegenüber den Steckstellen des gegenüberliegenden, vorhergehenden Moduls durch den Zwischenraum oder Abstand der Grundmodule untereinander erreicht wird.

13. Vorrichtung nach einem der Ansprüche 1 bis 12, **dadurch gekennzeichnet, dass** sie Führungselemente (10,11) für den Ringläufer (5) besitzt, welcher die Fadenführung (6) aufnimmt, wobei diese Elemente die Position der Magnetplatte in dem Luftspalt der Statoren halten und sich den Anziehungskräften zwischen den Magneten und den Polen des Magnetkreises widersetzen.

14. Vorrichtung nach Anspruch 13, **dadurch gekennzeichnet, dass** die Führungselemente aus Sätzen von Rollen (10) bestehen, die an dem Ringläufer (5) angeordnet sind und auf den Führungen (11), welche sich über die gesamte Länge des Abzugssystems erstrecken, hin und her laufen.

15. Vorrichtung nach einem der Ansprüche 1 bis 14, **dadurch gekennzeichnet, dass** die Regelung und Steuerung der Richtungsumkehrung der Changierung der Fadenführung (6) mit Hilfe von Erkennungselementen (13 - 16, 18) der Position des Ringläufers (5), welcher die Fadenführung aufnimmt, durchgeführt wird.

16. Vorrichtung nach Anspruch 15, **dadurch gekennzeichnet, dass** die Erkennungselemente für die Position des Ringläufers (5) aus einem oder mehreren Hall-Sonden - Sensoren (18) bestehen, welche in der Nähe des Durchgangs des Flachmagneten (1) angeordnet sind, der das bewegliche Element darstellt, das die Fadenführung verschiebt, wobei diese Sonde (18) ein Signal proportional zu dem Magnetfeld liefert.

17. Vorrichtung nach Anspruch 16, **dadurch gekennzeichnet, dass** das Signal, das von der Hall-Sonde geliefert wird, so verarbeitet wird, dass das Eintreffen des Magneten (1) durch Auftreten einer ersten Front und anschließend seine Verschiebung durch Zählen der Wechsel erfasst wird, die sich aus dem Durchlauf der Pole Nord und Süd des Magneten ergibt.

18. Vorrichtungen nach einem der Ansprüche 1 bis 16, die eine große Anzahl von Modulen für einen großen Hub besitzen, **dadurch gekennzeichnet, dass** nur die Module, welche gegenüber der Magnetplatte (1) angeordnet sind, gespeist werden, wobei die übrigen Elemente oder Module während der ganzen Zeit, in der sich der Magnet außerhalb ihrer Reichweite befindet, abgeschaltet sind, so dass sie abkühlen können.
